Europäisches Patentamt

European Patent Office

Office européen des brevets

(19)

(11) **EP 1 200 196 B1**

(12) **EUROPEAN PATENT SPECIFICATION**

(45) Date of publication and mention
of the grant of the patent:
**15.06.2005 Bulletin 2005/24**

(51) Int Cl.⁷: **B04C 5/181**, B04C 11/00,
A47L 9/16

(21) Application number: **00951138.7**

(22) Date of filing: **26.07.2000**

(86) International application number:
**PCT/CA2000/000873**

(87) International publication number:
**WO 2001/007168 (01.02.2001 Gazette 2001/05)**

(54) **APPARATUS AND METHOD FOR SEPARATING PARTICLES FROM A CYCLONIC FLUID FLOW**

VORRICHTUNG UND VERFAHREN ZUM ABTRENNEN VON TEILCHEN AUS EINEM
ZYKLONARTIGEN FLUIDSTROM

APPAREIL ET PROCEDE POUR LA SEPARATION DE PARTICULES DANS UN ECOULEMENT DE
FLUIDE CYCLONIQUE

(84) Designated Contracting States:
**AT BE CH CY DE DK ES FI FR GB GR IE IT LI LU
MC NL PT SE**

(30) Priority: **27.07.1999 US 361124**
**13.01.2000 US 482649**

(43) Date of publication of application:
**02.05.2002 Bulletin 2002/18**

(60) Divisional application:
**04078261.7 / 1 512 362**

(73) Proprietor: **G.B.D. Corporation**
**Hampton, Ontario L0B 1J0 (CA)**

(72) Inventors:
• **CONRAD, Wayne, E.**
**Hampton, Ontario L0B 1J0 (CA)**
• **PETERSEN, Dave**
**Courtice, Ontario L1E 2L8 (CA)**

(74) Representative: **W.P. Thompson & Co.**
**Coopers Building**
**Church Street**
**Liverpool L1 3AB (GB)**

(56) References cited:
**WO-A-98/43721**      **DE-C- 875 134**
**DE-C- 4 232 382**    **GB-A- 2 282 979**
**US-A- 1 937 765**    **US-A- 2 981 369**
**US-A- 3 988 132**    **US-A- 4 486 207**

## Description

The present invention relates generally to cyclonic separators. In one particular application, the invention relates to the cyclonic separation of particulate material from an air flow. In a preferred embodiment, the cyclonic separator is used in a vacuum cleaner to remove entrained particulate matter from an air stream.

## BACKGROUND OF THE INVENTION

The use of a cyclone, or multiple cyclones connected in parallel or series, has long been known to be advantageous in the separation of particulate matter from a fluid stream. Typically, a relatively high speed fluid stream is introduced tangentially to a generally cylindrical or frusto-conical container, wherein the dirty air stream is accelerated around the inner periphery of the container. The centrifugal acceleration caused by the travel of the fluid in a cyclonic stream through the cyclone causes the particulate matter to be disentrained from the fluid flow and, eg., to collect at the bottom of the container. A fluid outlet is provided for the extraction of the fluid from the centre of the top of the cyclone container, as is well known in the art.

A typical flow path in a cyclone separator is as follows. Fluid to be treated is introduced tangentially at a fluid inlet located at an upper end of the cyclone container. The fluid stream rotates around the inner surface of the cyclone container, and spirals generally downwardly around the inner surface of the container (if the cyclone container is vertically disposed). At a bottom end of the cyclone container the fluid stream travels radially inwardly, generally along the bottom of the container and then turns upwardly and proceeds vertically up and out of the cyclone container. The particulate matter separating action of the cyclonic flow occurs substantially around the inner surface of the container. Once the fluid moves inwardly to the centre of the container, and upwardly there through, there is little or no dirt separation achieved.

The difficulty experienced with prior art cyclonic separators is the reentrainment of the deposited particles back into the outgoing fluid flow. Deposited particles exposed to a high speed cyclonic flow thereover have a tendency to be reentrained. This is particularly problematic when the container has a solid bottom portion in which the dirt collects. However, there is a potential reentrainment problem even if the bottom of the container has a passageway provided in the bottom thereof to convey the separated particulate material away from the container.

If a high degree of separation is required, it is known to connect a plurality of cyclones in series. While using several cyclones in series can provide the required separation efficiency, it has several problems. First, if the separators are to be used in industry, they generally need to accommodate a high flow rate (eg. if they are to be used to treat flue gas). The use of a plurality of cyclones increases the capital cost and the time required to manufacture and install the separators. Further, the use of a plurality of cyclones increases the space requirements to house the cyclones as well as the back pressure caused by the air flow through the cyclones. These latter issues are particularly acute for cyclone separators which are to be contained in a small housing, such as a vacuum cleaner. Accordingly, there is a need for an improved anti-reentrainment means for cyclonic separators.

## SUMMARY OF THE INVENTION

In has now been discovered that a single cyclone having improved efficiency (eg. up to 99.9% efficiency) may be manufactured by positioning in the cyclone chamber a particle separation member for creating a dead air space beneath the cyclonic flow region of the cyclone chamber wherein the dead air space is in communication with the cyclonic flow region by a plurality of openings or apertures in the member. This construction effectively traps separated material beneath the cyclonic flow region and inhibits the reentrainment of the separated material. Thus, a single cyclone may be used in place of a plurality of cyclones to achieve the same separation efficiency.

As the fluid flow travels through the cyclone chamber, a boundary layer forms. Generally, the interior surface of a cyclonic chamber is smooth so as to provide for an uninterrupted cyclonic flow in the chamber. However, in the chamber, a boundary layer is still formed on all surfaces over which the fluid passes. According to the instant invention, the system (i.e. the motor means to move the fluid through the chamber, the fluid inlet to the chamber, the fluid outlet to the chamber and/or the construction of the separation member) is designed to minimize the thickness of the boundary layer in the vicinity of the apertures in the separation member.

In particular, as the fluid travels over the upper surface of the particle separation member, a boundary flow layer will form. The boundary layer will thicken until a thickness is reached at which the boundary layer has sufficient energy to break off and travel away from the upper surface. Generally at this point, the fluid travels upwardly to the fluid outlet from the cyclone. When the boundary layer breaks off from the upper surface, vortices are formed in the fluid stream adjacent the apertures in the separation member causing localized turbulence. The turbulent flow reentrains particles that had been separated from the fluid flow and may even pull some of the separated particles out of the dead air space beneath the cyclonic flow region of the cyclone chamber.

Examples of prior art cyclonic separators are disclosed in, for example, US-A-4486207, WO-A-98/43721, DE-C-875134, US-A-2981369, DE-C-4232382 and US-A-3988132. However, in these prior art arrangements it is possible for particles which have been separated into a retaining volume to be re-entrained into the cyclonic flow region.

In accordance with the instant invention, there is provided a separator for separating entrained particles from a fluid flow, the separator comprising:

(a) a cyclone chamber for containing a cyclonic flow in a cyclonic flow region, the cyclonic flow region having a radial width, an outer peripheral portion, a medial portion disposed interior of the peripheral portion and an inner portion disposed interior of the medial portion;
(b) means for introducing a fluid flow to the cyclone flow region for cyclonic rotation therein; and
(c) means for removing the fluid flow from the cyclone chamber;
characterized by
(d) particle receiving means disposed beneath the cyclone flow region for receiving particles separated from the fluid flow; and
(e) separation means disposed beneath at least a portion of the cyclone flow region and positioned to be contacted by the cyclonic flow in the cyclonic flow region and configured to inhibit re-entrainment of particles from the particle receiving means to the cyclonic flow region, the separation means having apertures and being positioned to connect the particle receiving means in flow communication with the cyclonic flow region such that, in operation, particles pass through the apertures to the particle receiving means.

In one embodiment, the particle receiving means comprises a sealed chamber except for the apertures and the separator further comprises emptying means for emptying the particle receiving means.

The particle receiving means may comprise a sealed chamber except for the apertures and the separator may further comprise emptying means for emptying the particle receiving means.

In another embodiment, the separator further comprises means for connecting the particle receiving means in flow communication with a conduit for transporting separated particles downstream from the particle receiving means.

In another embodiment, the separator further comprises aerodynamic means associated with the apertures for directing particles from the cyclonic flow region into the particle receiving means.

In another embodiment, the particle separating means extends under all of the cyclonic flow region to define a bottom surface of the cyclonic flow region.

In another embodiment, the apertures are positioned beneath only one or both of the peripheral and inner portions of the cyclonic flow region.

In another embodiment, the apertures are distributed regularly around the separating means.

In another embodiment, the fluid contacts only a portion of the separating means and the apertures are positioned only in said portion.

In another embodiment, the apertures comprise openings in the separation means.

The separator may be used in an upright vacuum cleaner. Accordingly, the separator may further comprise a cleaner head adapted for movement over a floor and having a fluid nozzle positionable adjacent the floor, the nozzle in fluid flow communication via a passageway with the separator fluid inlet, a handle for moving the cleaner head over the floor, and a casing for housing the cyclone chamber. The casing is preferably pivotally mounted to the cleaner head. The separator may be used in a canister or a central vacuum cleaner. Accordingly, the passageway may further comprise a flexible portion that is positioned external of the cleaner head and the casing and the handle is affixed to the cleaner head.

In one embodiment, the apertures are sized to inhibit elongate particles from passing there through, whereby elongate particles collect on top of the particle separating member.

The apertures may comprise slits having longitudinally extending upstream and downstream edges relative to the fluid flow and transversely extending sides and the edges may be longer than the sides.

The length of the edges may be substantially aligned with the radial width of the cyclone chamber.

The length of the edges may define a longitudinally extending axis which are at an angle of up to 45° to the radius of the cyclonic flow region.

The apertures may have a radial outer end and a radial inner end and the radial outer end may be positioned adjacent the outer wall of the cyclone chamber.

The apertures may have an upstream edge and downstream edge, relative to the fluid flow and the thickness of the particle separating member may be reduced adjacent the upstream edge of the apertures.

The separation means may have an upper surface and a lower surface and the upper surface may be angled towards the particle receiving means adjacent the upstream edge and the lower surface may be angled away from the aperture adjacent the downstream edge.

The separation means may be disposed substantially perpendicularly to a longitudinal axis of the cyclonic flow region.

The separator may be constructed to reduce turbulent fluid flow in the vicinity of the apertures.

The separator may further comprise a fluid pump for causing the fluid to flow through the separator, wherein the fluid flow through the cyclone chamber is pulsed.

The separator may further comprise a moveable closure member on one of means for introducing a fluid flow to the cyclone flow region and means for removing the fluid flow from the cyclone flow region for causing a pulsed fluid flow through the cyclone chamber.

in one embodiment, the separation means has from 5 to 35 apertures.

In another embodiment, the number of apertures in the separation means is calculated by the formula:

$$\text{number of apertures} = \frac{H}{D} \times 4 \pm 20\%$$

where H= the vertical height of the cyclonic flow region

D= the Diameter of the cyclone chamber

In another embodiment, the cyclone chamber has a diameter and each aperture has a longitudinally extending upstream edge and a longitudinally extending downstream edge, relative to the fluid flow, and transverse sides extending between the edges, the edges have a length which is less than 10% of the diameter of the cyclone chamber and the sides have a length which is 25 - 35% of the length of the edges.

In another embodiment, the edges are substantially radially aligned with the cyclone chamber.

In another embodiment, each aperture has an upstream edge and a downstream edge, relative to the fluid flow, and the upstream edge is angled towards the particle receiving means, the included angle between the upstream edge and the upper surface of the separation means is from 15 to 90°.

In another embodiment, each aperture has an upstream edge and a downstream edge, relative to the fluid flow, and the downstream edge is angled towards the particle receiving means, the included angle between the downstream edge and the upper surface of the separation means is from 15 to 90°.

In another embodiment, the fluid flow changes direction and travels to means for removing the fluid flow from the cyclone chamber at a position as it travels over the separation means and the separator further comprising a baffle positioned beneath the separation means at a position 10 to 20° downstream of the position at which the fluid flow changes direction.

In another embodiment, the separation receiving means has a bottom to comprise a sealed chamber except for the apertures and the baffle extends between the separation means and the bottom of the separation receiving means.

The separator may include means for reducing the thickness of the boundary layer of fluid as it travels over the separation means.

In one embodiment, the means for reducing the thickness of the boundary layer comprises means for pulsing the fluid flow through the cyclone chamber. The means for pulsing the fluid flow through the cyclone chamber may comprise means for pulsing an electrical signal to the fluid pump means. Alternately, or in addition, the means for pulsing the fluid flow through the cyclone chamber may comprise means for cyclically opening and closing one of the means for introducing a fluid flow to the cyclone flow region and the means for removing the fluid flow from the cyclone chamber.

In another embodiment, the means for reducing the thickness of the boundary layer comprises constructing and positioning the apertures means to reduce turbulent fluid flow over the separation means.

In another embodiment, the means for reducing the thickness of the boundary layer comprises constructing and positioning flow disruption means beneath the separating means for disrupting cyclonic fluid flow in the particle receiving means.

The apertures may be aerodynamically shaped to direct particles from the cyclonic flow region into the particle receiving means.

The separator may further compris a plurality of baffle means positioned in the particle receiving means.

The baffle means may depend downwardly from the separation means.

The particle receiving means may have a bottom surface and the baffle means may be spaced from said bottom surface to define an open area between the baffle means and the bottom surface.

The baffle means may extend to a position adjacent said bottom surface.

A baffle means may be disposed adjacent each aperture.

The baffle means may be disposed downstream of said apertures.

The apertures may have a longitudinal length and the baffle means may comprise a main body and a second portion, the main body portion having at least the same longitudinal length as said apertures and extending in a direction transverse to air flow along the upper surface of the separation means and the second portion may extend at an angle to the main body portion at a position that does not underlie the aperture.

The second portion may be disposed substantially perpendicularly to the main body portion.

The second portion may extend upstream from the main body portion.

The apertures may have longitudinally extending upstream and downstream edges and the baffle means may have a portion that is at least the same length as the edges.

The apertures may comprise slits having longitudinally extending upstream and downstream edges relative to the fluid flow and transversely extending sides and the edges may be longer than the sides.

The length of the edges may be substantially aligned with the radial width of the cyclone chamber.

The length of the edges may define a longitudinally extending axis which are at an angle of up to 45° to a radial line extending outwardly from the centre of the cyclone chamber.

The separator may further comprise access means for selectively providing access to the particle receiving means via the separation means.

The access means may form part of the separation means and, when in the open position, may provide an opening between the particle receiving means and the cyclone chamber.

The access means may be freely moveable between its open and closed positions whereby the access means moves to its open position when the chamber is inverted.

The access means may have a connecting portion which is pivotally connected to the separation means.

The separator may further comprise a weighted member connected to the access means at a position spaced from the connecting portion.

The access means and the separation means may form a surface that underlies all of the cyclonic flow region.

The access means may comprise a chord section of the separation means.

The prior art teaches the need for a plurality of cyclones in order achieve ultra-high particle separation efficiencies. However, it has been found that ultra-high efficiencies can be obtained in a single stage cyclone incorporating the particle separation member of the present invention. Accordingly, cleaning efficiencies in excess of 99% may be obtained with a single stage separator utilizing a separator according to the present invention, thereby negating the need for second stage cyclonic separation altogether. Cleaning efficiencies of over 99.5% have also been achieved for particle laden air streams.

Also disclosed herein is a method for separating entrained particles from a fluid flow, the method comprising the steps of introducing a fluid to flow cyclonically in a chamber having a cyclonic flow region, the cyclonic flow region having a radial width, an outer peripheral portion, a medial portion disposed interior of the peripheral portion and an inner portion disposed interior of the medial portion, removing particles from the fluid flow in the cyclone chamber via passages provided beneath one or both of the peripheral and inner portions, and removing the fluid flow from the chamber.

In one embodiment, the method further comprises the steps of storing the particles removed from the fluid flow and inverting the chamber to remove the separated particles.

In another embodiment, the method further comprises the step of transporting separated particles downstream from the chamber.

In another embodiment, the separator comprises the dirt separation mechanism for a vacuum cleaner and the method further comprises passing a cleaning head over a surface to clean the surface.

In another embodiment, the method further comprises directing particles to pass into the passages.

BRIEF DESCRIPTION OF THE DRAWINGS

For a better understanding of the present invention, and to show more clearly how it may be carried into effect, reference will now be made by way of example to the accompanying drawings of a preferred embodiment of the present invention, in which:

Figure 1 is a perspective view of a household vacuum cleaner incorporating a cyclone separator according to the present invention;
Figure 2 is a front elevational view of the vacuum cleaner of Figure 1;
Figure 3 is a side elevational view of the vacuum cleaner of Figure 1;
Figure 4 is a cross-sectional view along the line 4-4 in Figure 1;
Figure 5 is a cut away perspective view of the cyclonic separation member of Figure 1 when removed from the vacuum cleaner;
Figure 6 is a cross-sectional view along the line 6-6 in Figure 2 with the bin removed;
Figure 7 is a cut away perspective view of an alternate embodiment of the cyclonic separation member of Figure 5;
Figures 8 and 9 are cross-sectional views along the line 6-6 in Figure 2 showing alternate configurations of the particle separation member of the present invention;
Figure 10 is an enlarged cross-section view of the particle separator member of the present invention, showing aperture detail;
Figure 11 is a sectional perspective view of the particle separator member having baffle members according to the present invention;
Figure 12 is an enlarged bottom plan view in the direction of arrow 12 of the baffles of Figure 11;
Figures 13 -15 are top plan views of various alternate configurations of the particle separation member of the present invention;
Figure 16 is a sectional side view of an alternate embodiment of the particle separator member of the present invention;
Figure 17 is an isometric view of a further alternate embodiment of the particle separator member of the present invention;
Figure 18 is an isometric view of a further alternate embodiment of the particle separator member of the present invention;
Figure 19 is a sectional perspective view of and alternate embodiment of the baffle members according to the present invention;
Figure 20 is a bottom plan view of the baffle members of Figure 19;
Figure 21 is an enlarged perspective view of the bin of Figure 1 when removed from the vacuum cleaner; and,
Figure 22 is an enlarged perspective view of the access member of Figure 21.

## DETAILED DESCRIPTION OF THE PREFERRED EMBODIMENT

The improvements in cyclonic separators described herein may be used with or in place of cyclonic separation devices of any sort which are used to separate particulate material from a fluid stream. For example, they may be used with a fluid stream consisting of one or more gasses such as industrial dust collection systems (eg. flue gas scrubbing), they may be used to classify particles according to their size or they may be used with a fluid stream consisting of one or more liquids (eg. a hydrocyclone) or with fluid streams comprising a gas/liquid mixture. It will be appreciated that they these cyclone separators may be used in any manner known in the particle separation art.

For example, the separation member according to the present invention may also be employed in the classification and/or sorting of particles by size. Particles to be sorted are entrained in a fluid flow and introduced to a cyclonic separator having a separation member according to the present invention, the separation member having a first aperture size. Particles smaller than the first aperture size are permitted to pass through the separation member and into a hopper for transfer to a subsequent cyclonic separator while larger particles are collected on top of the particle separator. The particles passing through the separation member are introduced cyclonically to a second cyclone having a separation member with apertures of a second, smaller size, relative to the first cyclone. As in the first cyclone, particles smaller than the second aperture size are permitted to pass through the separation member and into a hopper for transfer to a third cyclonic separator, while larger particle remain on the separation member in the second cyclone chamber. This process is repeated, as required, until the particles are classified as needed.

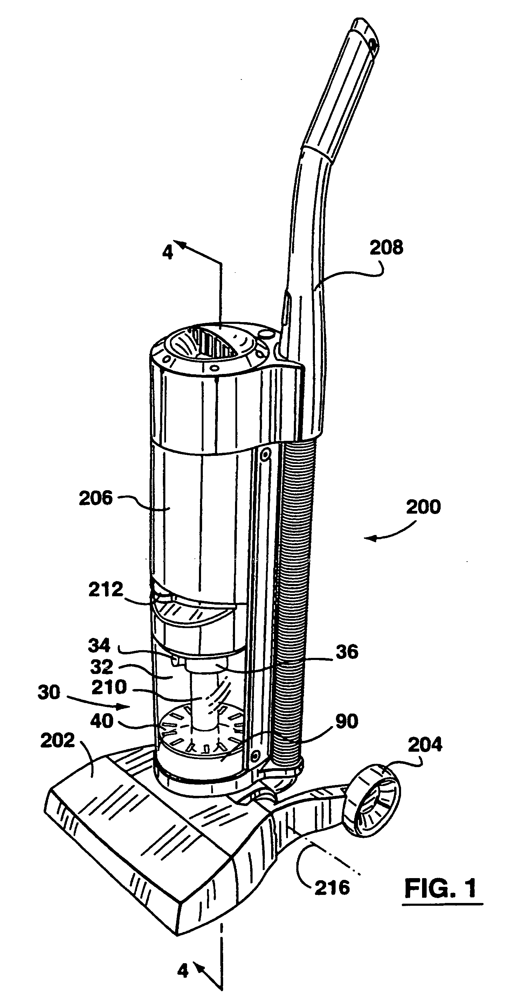

In one preferred embodiment, the cyclonic separator is used as a dirt separation means of a vacuum cleaner. As shown in Figure 1, as the cyclonic separator of this invention may have a dirt separation efficiency of 99.95% or higher, the vacuum cleaner may use only a single cyclonic separator and, in fact, the single cyclonic separator of this invention may be the only dirt separation means used in the vacuum cleaner. As is known in the art after filters (i.e. a filter positioned downstream from the motor of the vacuum cleaner) may optionally be provided, eg. a HEPA filter to remove very small quantities of particulate matter such as the carbon dust which is produced by the motor.

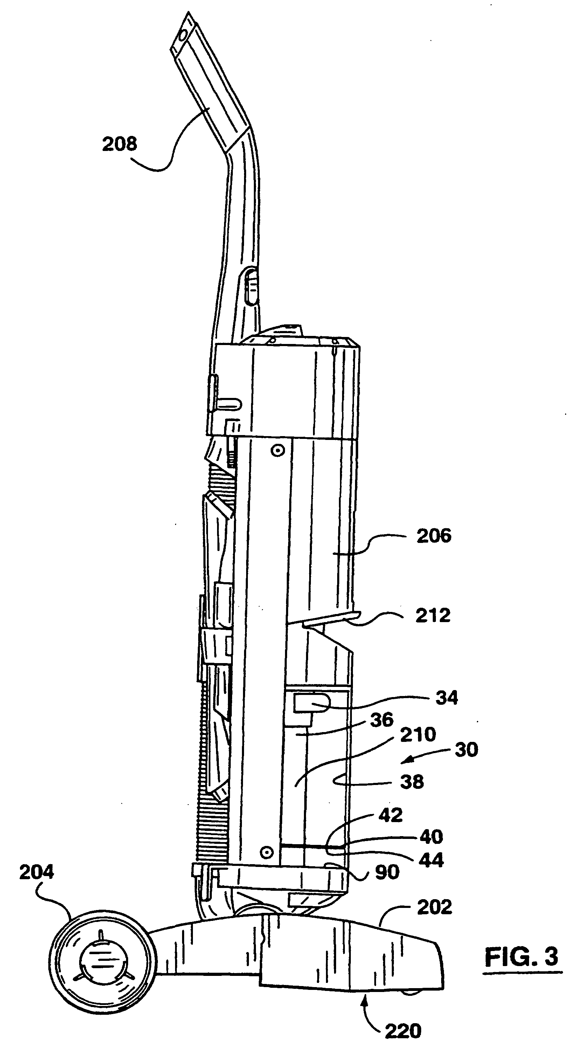

In the application as exemplified in Figures 1 to 5, particle separation member 30 is shown as the cyclone separator for vacuum cleaner 200. While separator 30 may be used in any vacuum cleaner (eg. an upright, a canister, a backpack cleaner or a central vacuum cleaning system), the following discussion describes the use of particle separation member 30 in an upright vacuum cleaner.

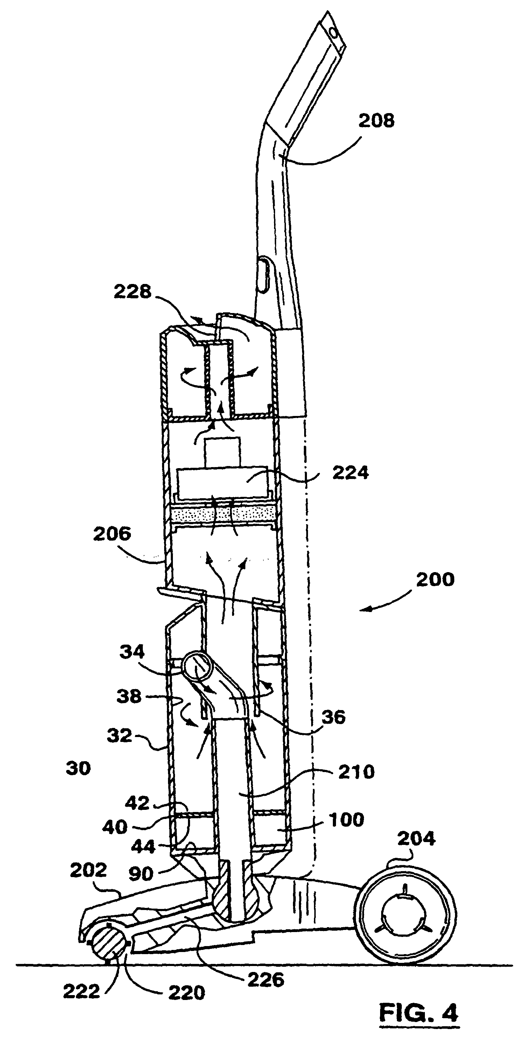

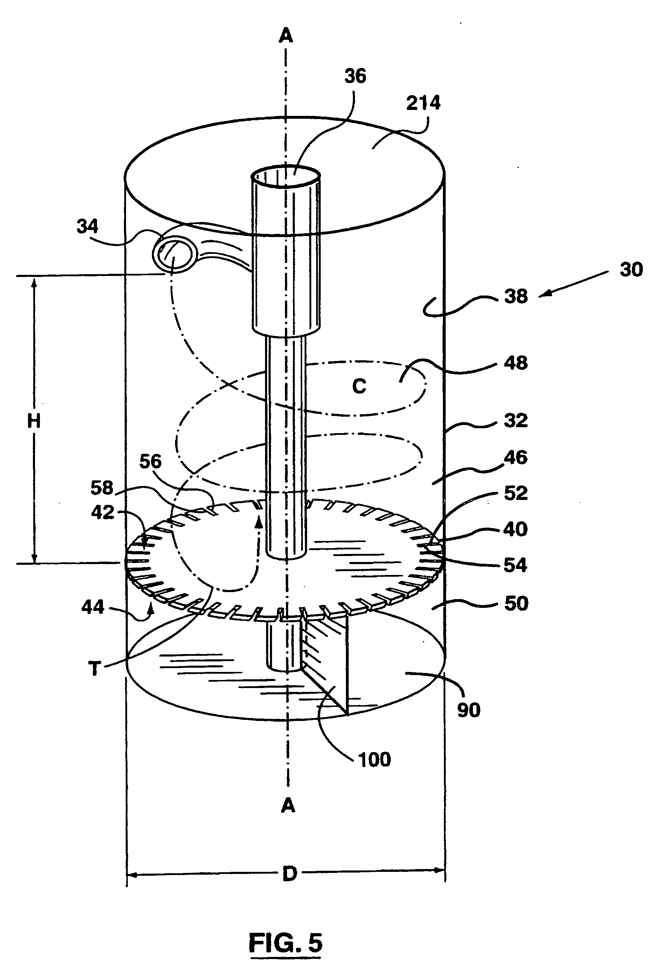

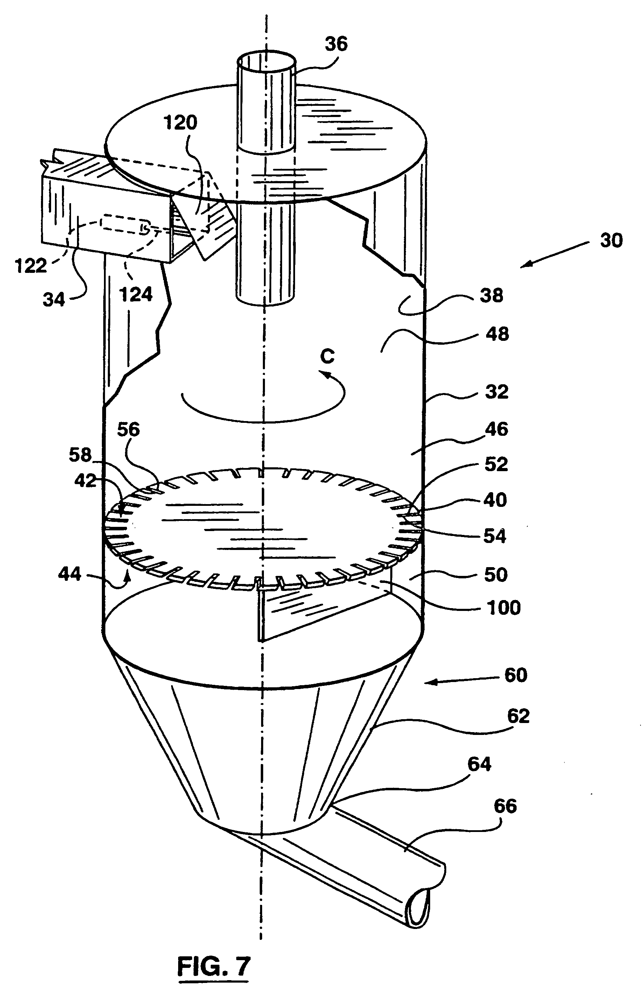

As exemplified in Figures 1 and 5, vacuum cleaner 200 has a floor cleaning head 202, means for moving cleaning head 202 across a floor (eg. wheels 204), main casing 206 rotatably attached to cleaner head 202, and a handle 208 for moving cleaner 200 across the floor. Main casing 206 houses separator 30. In this embodiment, a single separator 30 is used and comprises a central air feed conduit 210 in air flow communication with dirty air inlet 220 adjacent the floor in cleaner head 202 (see Figures 4 and 5) at one end and in air flow communication with curved air inlet 34 at the other end. Rotatably mounted brush 222 may be positioned in dirty air inlet 220.

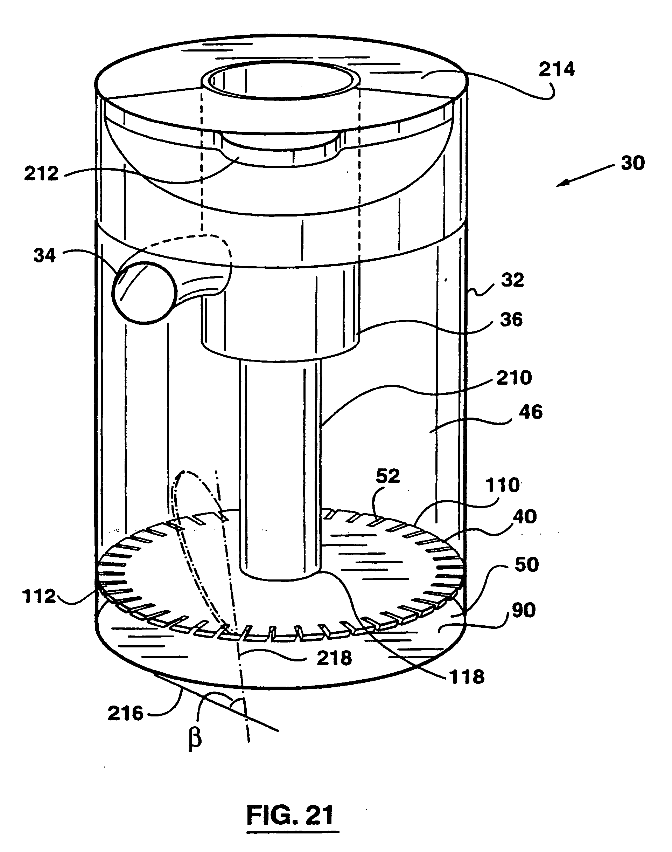

Bin 32 may be removable from main casing 206 by any means known in the art (see Figure 21), such as by the application of pressure by the hand of a user to handle 212, so that collected dirt may be removed from bin 32.

Cyclonic separator 30 comprises a bin 32 having an open end 214, an inlet 34 for delivering a cyclonic fluid flow to separator 30 and an outlet 36 for removing fluid from the separator. Inlet 34 need not be tangential but may be of any configuration which is capable of providing a cyclonic fluid flow to bin 32, such as an axial or screw cyclone inlet. Disposed in a lower portion of bin 32 is a separation member 40 which comprises a flat, disc-like member, having an upper face 42 and a lower face 44, and which substantially divides bin 32 into a cyclone chamber 46, having a cyclonic flow region 48 defined therein, and a particle receiving chamber 50. Separation member 40 may be made of plastic plate having a thickness of, eg. 1/40 of the diameter of bin 32. Cyclone chamber 46 and particle receiving chamber 50 communicate only via a plurality of apertures 52 in separation member 40. Apertures 52 comprise a plurality of openings or slits 54, each having an upstream edge 56 and a downstream edge 58 relative to the direction of cyclonic fluid flow in cyclone chamber 46 (arrow C), longer than the transverse width and oriented generally radially with respect to bin 32 (see Figure 5). Particle receiving chamber 50 comprises a chamber extending between lower face 44 and bottom face 90 of bin 32. Particle receiving chamber 50 preferably comprises about 10% of the volume of bin 32.

In use, a particle-laden fluid stream is introduced to cyclone chamber 46 via inlet 34 to flow cyclonically therein. The cyclonic flow proceeds rotationally around and downwardly through bin 32. The fluid stream is accelerated as it comes into the region of influence of particle separation member 40 which causes the fluid to change direction towards the central portion of cyclonic flow region 48 in cyclone chamber 46 (eg. around central air feed conduit 210) and is ultimately removed from cyclone chamber 46 via outlet 36. As the cyclonic fluid flow moves cyclonically down along inner wall 38 of cyclone chamber 46, it encounters separation member 40 and travels across separation member 40. The change in speed and direction of the fluid stream as it flows through cyclone chamber 46 causes particles entrained in the fluid stream to become disentrained. These separated particles have a greater mass and continue to accelerate towards separation member 40 where (depending on particle size) they pass through apertures 52 into particle receiving chamber 50. The separated particulate matter collects in particle receiving chamber 50. Larger particles separated from the fluid flow by the cyclonic action and incapable of passing through apertures 52 accumulate on upper surface 42 of separation member 40.

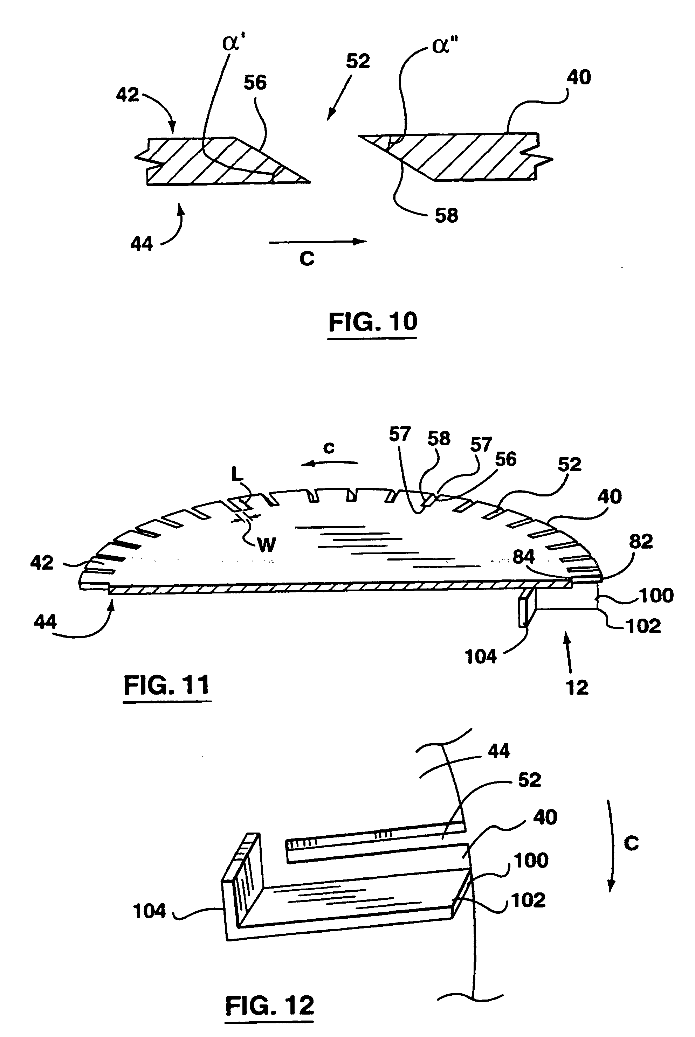

The reentrainment of deposited particles into the cyclonic flow is related to the speed and degree of cyclonic flow of fluid passing over deposited particles. Accordingly, any reduction in the cyclonic flow of the fluid within the particle receiving chamber will beneficially enhance the anti-reentrainment properties of the separator. To that end, referring to Figure 11 particle receiving chamber 50 may be provided with one or more baffles 100. The baffles operate to reduce and preferably stop the cyclonic flow of air beneath particle separation member 40. Thus particle receiving chamber 50 forms a dead air space beneath cyclonic flow region 48.

It will thus be appreciated that separation member 40 assists in particle separation in several ways. First, by providing a discontinuous surface, it disrupts the cyclonic flow thus assisting in separating entrained particulate matter from the fluid stream. Secondly, if provides an area (particle receiving chamber 50) which is separate from cyclone chamber 46. If a portion of the fluid stream enters particle receiving chamber 50, the cyclonic flow may be slowed or terminated thus allowing entrained particulate matter to separate out without the potential for reentrainment.

In use, an air flow is created by a motor 224 (eg. the fluid pump means) in vacuum cleaner 200 to draw air from, eg., from dirty air inlet 220, through passageway 226 in cleaner head 202, through centre air feed conduit 210 and into cyclone chamber 46 via inlet 34. Cyclonic flow is maintained in cyclone chamber 46 thereby causing particles entrained in the cyclonic flow to be deposited, with smaller particles passing through apertures 52 into particle receiving chamber 50, while larger particles (eg. elongate particles such as hair, carpet fibres and the like) are deposited on upper surface 42 of separation member 40. Air then exits cyclone chamber via air outlet 36, through motor 224 and then exits the cleaner via outlet 228. the finer dirt tends to be separated and deposited in particle receiving chamber 50. Therefore, after operation of vacuum cleaner 200, particles of varying size may have collected in bin 32 both above and below separation member 40.

In the embodiment of Figure 7, cyclonic separator 30 is used to separate material entrained in an industrial fluid stream. In order to allow the separated material to be collected without interrupting the flow of fluid through cyclonic separator 30, particle receiving chamber 50 is provided with a hopper 60 having a sloping wall 62 leading to a hopper exit 64. Hopper exit 64 communicates with a particle transport conduit 66 for transporting received particles away from receiving chamber 50. Hopper 60 collects separated particles for removal by transport conduit 66 (such as due to gravity flow).

It will be appreciated that cyclone chamber 46 may be of any design known in the art. Inner wall need not be cylindrical as shown in Figure 1 but may be of any shape known in the art. Further, inlet 34 and outlet 36 may be positioned at any location and more than one inlet and outlet may be used.

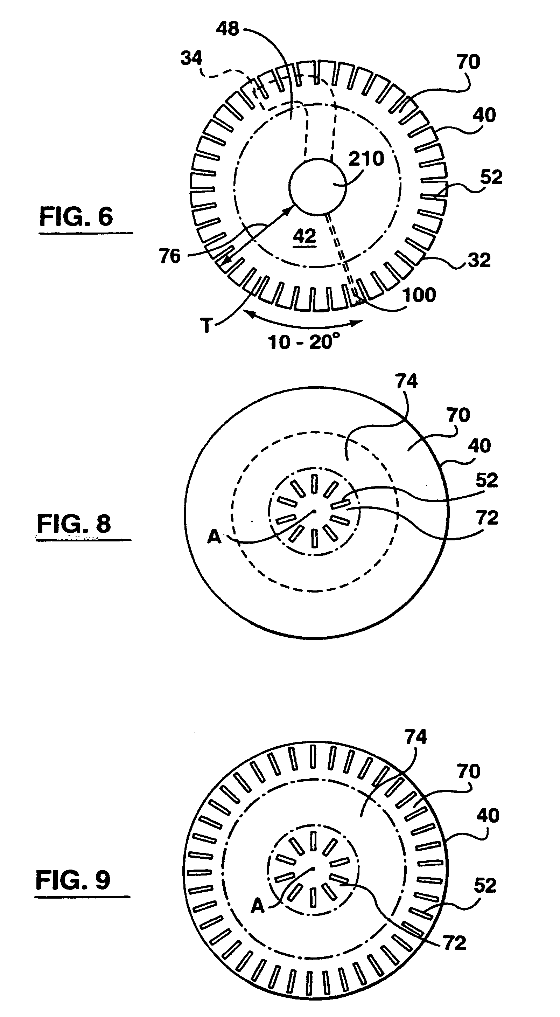

The location of apertures 52 have been found to affect the particle separation characteristics of separation member 40 for a given cyclone configuration and application. It has been found that the anti-reentrainment characteristics of separation member 40 are enhanced if apertures 52 are concentrated beneath peripheral portion 70 of cyclonic flow region 48 (see Figure 6), inner portion 72 of cyclonic flow region 48 (see Figure 8), or both peripheral portion 70 and inner portion 72 (see Figure 9) thereby leaving medial portion 74 substantially free from apertures 52. If apertures 52 are provided beneath medial portion 74 without any means provided in particle receiving chamber 50 for preventing any substantial (and preferably all) cyclonic flow in particle separating chamber 50, then some of the particulate material in particle separation chamber 50 will be reentrained into the air flow in cyclone chamber 46. Accordingly, it is preferred that there are no apertures 52 beneath medial portion 74 when there are no means (eg. baffles) to prevent cyclonic flow in particle separation chamber 50. It will be appreciated that a few apertures 52 may be provided in medial portion 74 without creating substantial reentrainment.

Preferably, peripheral portion 70 comprises approximately the outermost one quarter of the radial width 76 of cyclonic flow region 48, and inner portion 72 comprises approximately the innermost one quarter of the radial width 76 of cyclonic flow region 48. Medial portion 74 therefore comprises half of the radial width 76.

If a cyclone separator configuration is varied, the shape and size of cyclonic flow region 48 will vary. For example, referring to Figure 6, cyclone bin 32 having central air feed conduit 210 results in an annular-shaped cyclonic flow region 48. As a result, cyclonic flow region 48 has a radial width 76 between central air feed conduit 210 and inner wall 38. However, if there is no member positioned in bin 32 (as shown in Figures 8 and 9), then cyclonic flow region 48 has a radial width 76 which extends from central axis A to inner wall 38. Bin 32 may have a non-circular cross-section (eg. elliptical) or any non-curvilinear cross-section which permits a substantially cyclonic flow therein. Also, the radial width of cyclone chamber 46 may vary along its longitudinal length (i.e. in the direction of axis A), and may be, eg., cylindrical, frusto-conical or any other shape having beneficial cyclonic particle separation characteristics.

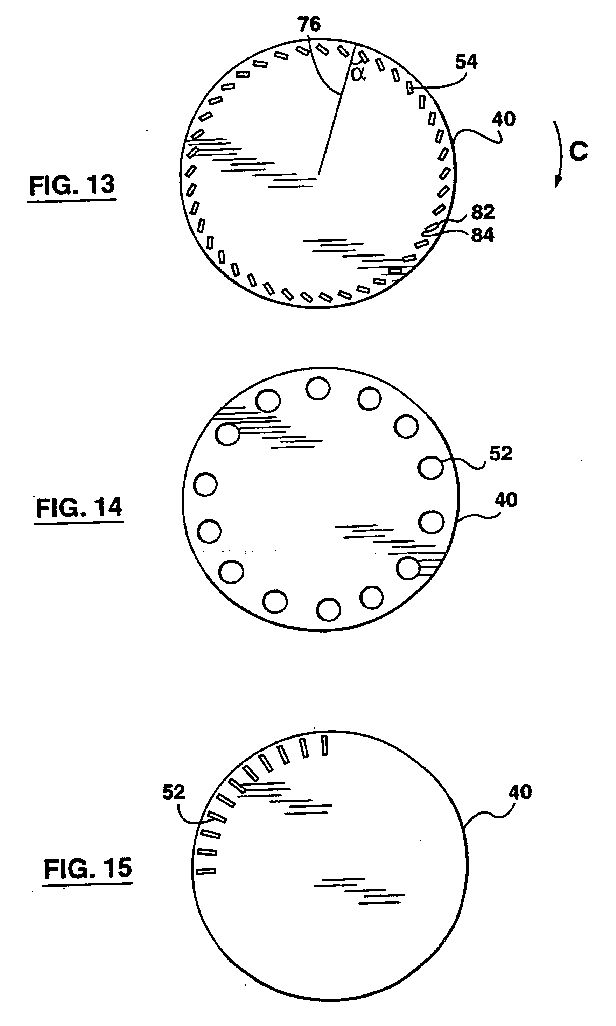

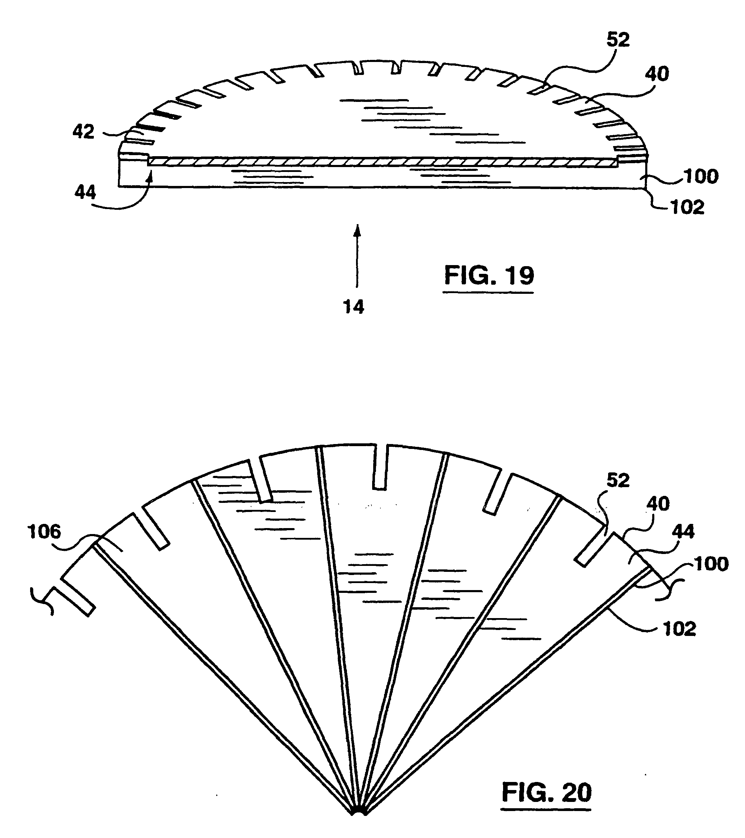

Apertures 52 may be of any particular shape. For example, they may be circular (see Figure 14), rectangular (see Figure 19), triangular, or other regular or irregular shape. Preferably, if apertures 52 are located against the inner or outer edge of separation member 40, then they have only one wall 57. For example, as shown in Figure 5, apertures 52 extend all the way to inner wall 38 of bin 32 while in Figure 9 they terminate inwardly of inner wall 38. While apertures 52 may be any shape, in a preferred embodiment, they have a length greater than their width. In particular, as shown in Figure 11, upstream and downstream edges 56, 58 are preferably longer than the spaced opposed sides 57 extending between edges 56, 58 (eg. edges 56, 58 are preferably at least twice the length of sides 57) so that apertures 52 define slits.

As shown in Figure 11, slits 54 may extend generally radially (i.e. edges 56, 58 may extend generally radially). However, as shown in Figure 13, slits 54 may be angled slightly, relative to radial width 76, so that the outer edge 82 of an aperture 52 is upstream of the inner edge 84, relative to the cyclonic air flow (indicated by arrow C). The angle $\alpha$ of slits 54 relative to radial width 76 may be up to 45°.

Preferably apertures 52 extend radially and edges 56, 58 have a length L which is about 10% or less of diameter D of bin 32 and sides 57 have a length W (i. e. the width of the apertures) which is about 5% or less of diameter D of bin 32 (see Figure 11). More preferably, length W is about 25 to 35% of length L.

Apertures 52 may be equidistantly spaced apart around separation member 40 (see Figures 6 - 9) or they may be positioned with different spacings between adjacent apertures 52. Further, apertures 52 may be continuously positioned around all of separation member 40 (see Figures 6 - 9) or apertures 52 may be positioned around only a portion of separation member 40 (see Figure 15). Distributing apertures 52 over only a region may be beneficial where only a portion of dirt separation member 40 is contacted by the cyclonic flow in bin 32. This may be used, for example, if bin 32 has a single inlet 34. In such a case, the sector of separation member 40 which will be contacted by the cyclonic flow may be predetermined and apertures 52 provided only in that sector.

Preferably, particle separation member 40 will have from about 5 to about 35 apertures 52. The number of apertures 52 which may be required for a particular system may be determined by the formula:

$$\text{Number of apertures} = \frac{H}{D} \times 4 \pm 20\%$$

where H= the vertical height of cyclonic flow region 48

D= the diameter of bin 32 (see Figure 5)

The formula provides a rough approximation of the ideal number of apertures 52 for a particular system (i.e. within 20%). The actual number of apertures which are required for maximum separation efficiency for a particular system may vary slightly from the formula.

It should be noted that dust separation member 40 need not be positioned perpendicular to the cyclonic (ie. longitudinal) axis of cyclonic flow region 48 in cyclone chamber 46. In particular separation member 40 may be at an angle to the axis.

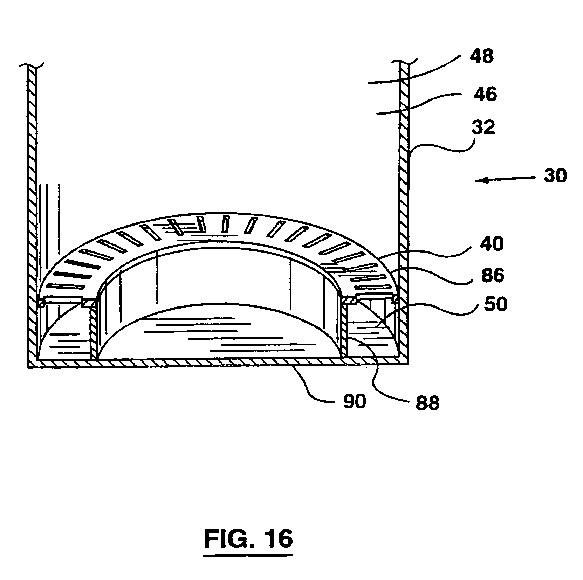

Referring now to Figure 16, separation member 40 need not extend across the entirety of cyclonic flow region 48, but rather may be disposed in only the portion of cyclonic flow region 48 beneath which apertures 52 are to be provided. By way of example only, Figure 16 shows a separation member 40 which comprises an annular ring 86 disposed beneath peripheral portion 70 of cyclonic flow region 48. Particle receiving chamber 50 is disposed thereunder, between bin 32 and an inner wall 88. It will be understood by one skilled in the art that separation member 40 may equally have any other configuration suitable for a given separator application without departing from the scope of the present invention. It will be appreciated, for example, that separator 40 may comprise an annular ring positioned beneath inner portion 72 of cyclonic flow region 48.

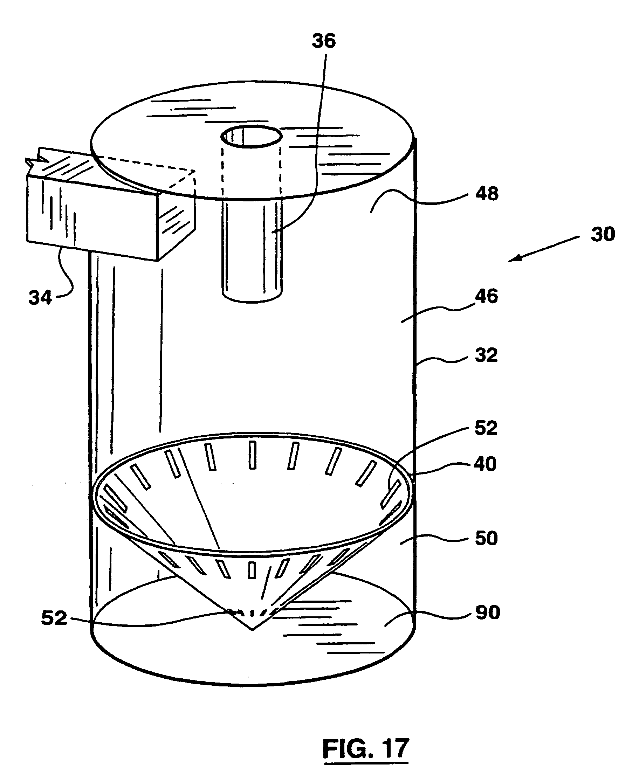

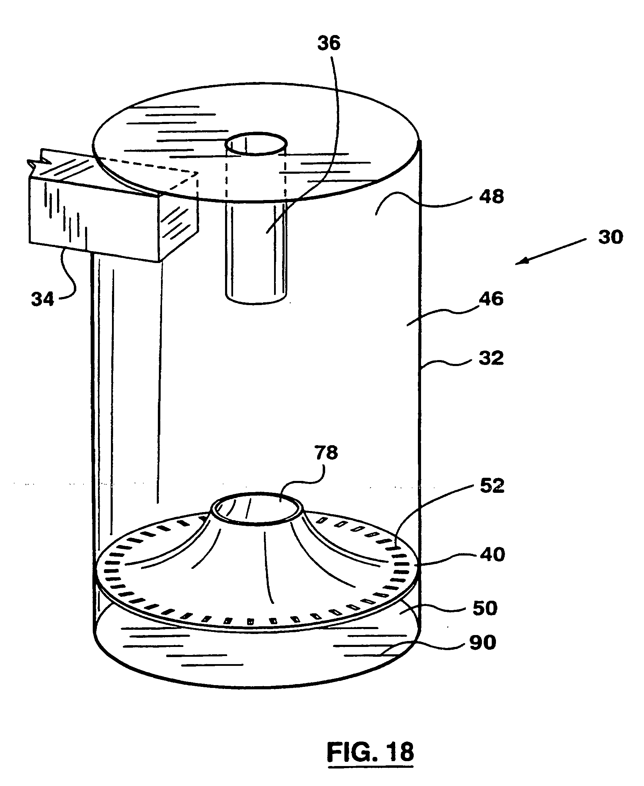

Referring to Figures 17 and 18, respectively, separation member 40 need not be disc-shaped, but may also be conical or trumpet-shaped. It may be convex (i.e. it may project into particle receiving chamber 50 as shown in Figure 17) or it may be concave (i.e. it may project away from particle receiving chamber 50 as shown in Figure 18). It will be appreciated that separation member 40 need not define a continuous surface. For example, as shown in Figure 18, it may have a curved surface in which apertures 52 are provided and a flat central top portion 78.

Referring to Figure 10, edges 56 and 58 may be aerodynamically shaped to enhance the performance of separation member 40. For example, the thickness of particle separation member 40 is preferably reduced adjacent the upstream edge 56. Referring to Figure 10, aperture 52 has a sloped upstream edge 56 to assist in directing air and particles from cyclone chamber 46 to particle receiving chamber 50. Upstream edge 56 is preferably sloped with respect to upper surface 42 such that the included angle $\alpha'$ is from 15 to 90° and an included angle less than 30° is more preferred. The thickness of downstream edge 58 of particle separation member 40 may be substantially unchanged. Alternately, aperture 52 is preferably shaped such that downstream edge 58 is sloped with respect to upper surface 42 to assist in directing air and particles from cyclone chamber 46 to particle receiving chamber 50. Preferably, the included angle $\alpha''$ is from 15 to 90° and an included angle less than 30° is more preferred.

Preferably, baffles 100 are provided on lower surface 44 and extend away from particle separation member 40. If separator 30 has a bottom 90, then preferably, baffles 100 extend from lower surface 44 towards bottom 90 but do not touch bottom 90. Baffles 100 preferably extend approximately three-quarters of the distance from lower surface 44 of separation member 40 to the bottom 90 of particle receiving chamber 50, but may be longer or shorter if desired. Preferably baffles 100 are parallel to the longitudinal axis of cyclone bin 32.

As shown in Figures 19 and 20, a baffle 100 is preferably disposed adjacent each aperture 52 on the downstream side, relative to cyclonic flow in cyclonic chamber 46 (arrow C). For example, a baffle 100 may be offset 15° downstream from its associated aperture 52. It will be appreciated that a baffle 100 need not be associated with each aperture 52. Preferably the baffles are immediately downstream of each aperture 52.

Baffles 100 comprise a wall 102 which may extend radially inwardly or which may be curved. Preferably wall 102 is substantially parallel to aperture 52 along its length. Wall 102 extends at least coterminously with the length of edges 56, 58 apertures 52. Preferably, wall extends at least three times the length of edges 56, 58.

As shown in Figures 11 and 12, baffle 100 may also have a lateral wall 104 disposed adjacent outer and/or inner edges 82 and 84 of aperture 52. Wall 104 preferably extends from wall 102 in the upstream direction. If an aperture 52 is disposed in peripheral portion 70, baffle 100 preferable has one lateral wall 104 only, disposed adjacent inner edge 84. Wall 102 is positioned inward of edge 84 so as to define a dead air space beneath aperture 52. If an aperture 52 is located in inner portion 72, baffle 100 preferably has a lateral wall 104 disposed adjacent inner edge 84 and outer edge 82 of aperture 52 (not shown). Walls 104 may thus effectively define an open central area in particle receiving chamber 50.

Baffles 100, configured as a wall 102 alone or in conjunction with a lateral wall 104, reduce and preferably stop the cyclonic nature of the fluid flowing beneath separation member 40. Referring to Figures 19 and 20, baffles 100 may extend from the wall of bin 32 to its centre to effectively divide particle receiving chamber 50 into a plurality of pie-shaped compartments 106 within particle receiving chamber 50. This configuration substantially inhibits any fluid flow, cyclonic or otherwise, within compartments 106, thereby beneficially enhancing the anti-reentrainment of characteristics of separation member 40.

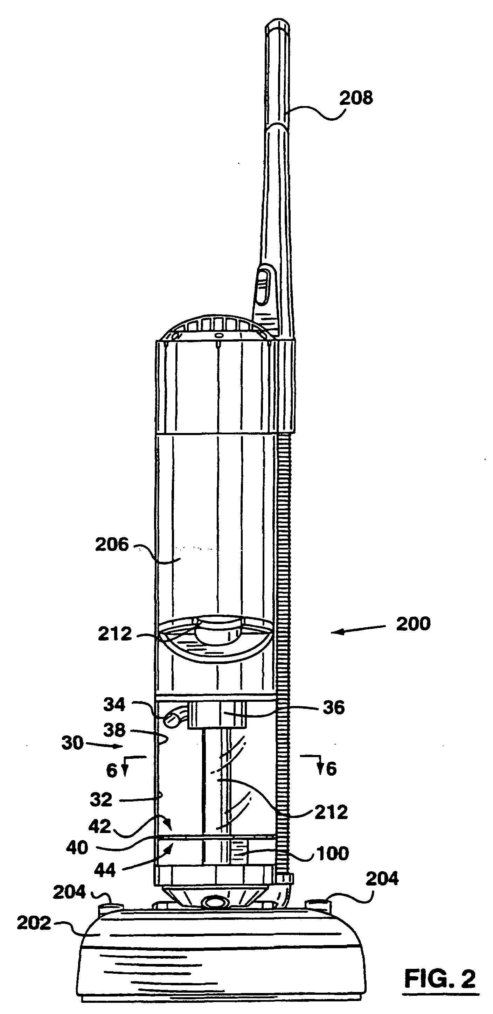

Preferably, as shown in the embodiment of Figures 2, 4, 5 and 7, a single baffle 100 is provided beneath particle separation member 40. As shown in these embodiments, baffle 100 extends vertically between bottom 90 and lower face 44 and radially outwardly from central air feed conduit 210 to inner wall 38. In this embodiment, baffle 100 is preferably positioned about 10 to 20° downstream from the point T where the cyclonic flow changes direction to flow upwardly through cyclonic flow region 48 (see figures 5 and 6).

Although as described above, it is desirable to position apertures 52 in peripheral portion 70 and/or inner portion 72 of cyclonic flow region 48, when baffles 100 are used in conjunction with apertures 52 the positioning of apertures 52 is less critical. In such a case, apertures 52 with baffles 100 may be positioned at any location along the radial width of particle separation member 40 and may be disposed in any one or more of inner portion 72, medial portion 74 and peripheral portion 70 of cyclonic flow region 48.

After operation of vacuum cleaner 200, particles of varying size may have collected in bin 32 both above and below separation member 40. To empty such collected contents, bin 32 is preferably removable from main casing 206, via, eg., handle 212, and inverted (typically over a refuse collector of the like) to cause the collected particles on upper face 42 to fall from bin 32 under the influence of gravity.

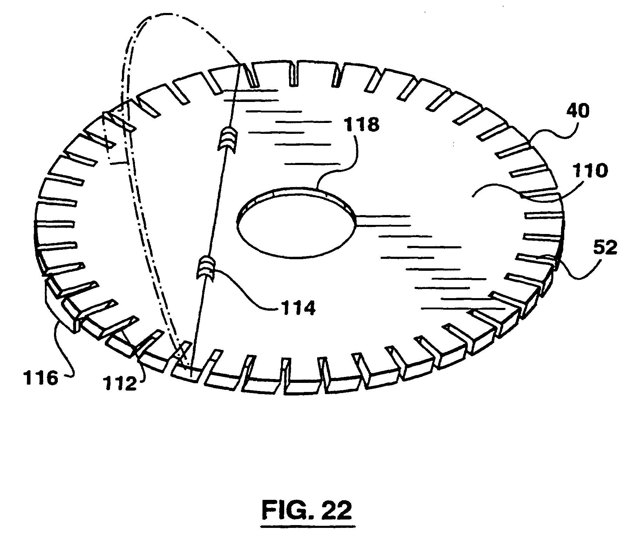

If cyclone separator has a closed bottom 90, then a door or the like is preferably provided to assist in emptying chamber 50. The door may be provided on the outer wall of bin 32. Preferably, particle separation member 40 is constructed to assist in emptying the contents of particle receiving chamber 50 when bin 32 is inverted. To this end, particle separation member 40 may be constructed to provide an opening when bin 32 is inverted (see for example Figures 21 and 22) or a door may be provided in bin 32 prior to inverting bin 32.

Pursuant to the first alternative, separation member 40 may comprise a main body 110 and an access member 112, as shown in Figure 22. Access member 112 comprises a chord section of separation member 40 pivotally connected to main body 110 by a hinge member 114 to swing between a closed position, substantially planar with main body 110 (as represented by the solid lines in Figures 21 and 22) and an open position, wherein access member 112 swings upwardly relative to main body 110 (as represented by the broken lines in Figures 21 and 22).

Referring again to Figure 21, when bin 32 is removed from vacuum cleaner 200 and inverted, access member 112, by virtue of its pivoting connection to main body 110, is permitted to freely swings to its "open" position under the influence of gravity, thereby permitting the contents of particle receiving chamber 50 to fall from particle receiving chamber 50 and out of bin 32. When bin 32 is returned to its upright position, the access member 112 falls to its closed position under the influence of gravity. To bias access member 112 towards its closed positioned when bin 32 is upright, access member 112 may optionally be provided with a weight 116, or a suitable spring means (not shown) or other biasing means known to those skilled in the art. Hole 118 is provided to permit centre air feed conduit 210 to pass there through.

The direction of the pivot axis 218 of hinge member 114 is preferably selected to assist access member 112 to remain closed while the vacuum cleaner is in use. If the vacuum cleaner is an upright vacuum cleaner in which particle separation member 40 is generally horizontally disposed position when main casing 206 is in the upright storage position (eg. separation member 40 is perpendicular to inner wall 38), then particle separation member 40 will be at an inclined position when main casing 206 is pivoted to the in use position. Access member 112 has a pivot axis 218 which is preferably not parallel to pivot axis 216 of the upper casing 206 of the vacuum cleaner. In such a case, no weight may be required. Preferably, pivot axis 218 of access member 112 is at an angle β of 10 - 50°, preferably 20° to 40°, and more preferably about 30° to the pivot axis 216 of upper casing 206 (see Figure 21).

Access member 112 is preferably provided in the rear portion of the cyclone bin 32 to prevent access member 112 from opening during use. In particular, all or a major portion of access member 122 is preferably positioned rearward of centre air feed 210 (i.e. towards handle 208). In such a case, no weight may be required.

As the fluid flow travels through bin 32, a boundary layer forms. A boundary layer is formed on top of particle separation member 40 as the fluid travels over upper surface 42 of particle separation member 40. The boundary layer will thicken until a thickness is reached at which the boundary layer has sufficient energy to break off and travel away from upper surface 42 (i.e. point T). When this occurs, vortices are formed in the fluid stream adjacent apertures 52 causing localized turbulence. The turbulent flow reentrains particles that had been separated from the fluid flow and may even pull some of the separated particles out of particle receiving chamber 50. According to the instant invention, separator 30 is preferably constructed to minimize the thickness of the boundary layer when it breaks off thereby reducing turbulent flow in the vicinity of apertures 52. The introduction of the separation member according to the present invention to a cyclonic separator dramatically increases the overall efficiency of the separator. The prior art teaches the need for a plurality of cyclones in order achieve ultra-high particle separation efficiencies. However, it has been found that ultra-high efficiencies can be obtained in a single stage cyclone incorporating the particle separation member of the present invention. Accordingly, cleaning efficiencies in excess of 99% may be obtained with a single stage separator utilizing the separator 30 according to the present invention, thereby negating the need for second stage cyclonic separation altogether. Cleaning efficiencies of over 99.5% have also been achieved for particle laden air streams.

Therefore, the present invention permits ultra-high efficiencies to be attained with relatively simple separator configurations compared to the prior art. The reduction of separator structure, in turn, beneficially reduces the fluid pressure losses across the separator, thereby permits a deeper vacuum (increased fluid flow rate) to be drawn for a given motor size. For household vacuum cleaner applications, back pressures of only 4 - 8 kpa may be obtained allowing the motor size to be reduced without sacrificing the vacuum strength of the device. The reduced structure and motor size also beneficially result in a cost and size savings to the overall separator unit.

The baffle members according to the present invention greatly enhance the performance of the separation member and greatly assist in obtaining ultra-high efficiencies. The projection of baffle members into the particle receiving chamber beneficially disrupts and, depending on the baffle configuration, substantially inhibits cyclonic flow in the particle receiving chamber, thereby reducing the reentrainment of deposited particles.

In another preferred embodiment, the separation efficiency of particle separation member 40 may be increased by pulsing the electrical signal to motor 224. The timing of the pulses is determined to reduce and preferably minimize the maximum thickness of the boundary layer of fluid as it travels over upper surface 42 in the vicinity of point T. This produces a pulsed fluid flow through bin 32. Alternately, such a pulsed flow may be mechanically produced such as by providing inlet 34 with an moveable closure member such as plate 120 to which a means is attached to cause the plate to cyclically open and close inlet 34, eg. a spring, a solenoid 122 having an arm 124 attached to plate 120, or the like. Alternately, the aperture closure member may be provided on outlet 36. These mechanical devices effect the back pressure in bin 32 so as to favour smooth (laminar) boundary layer flow as opposed to turbulent flow in the vicinity of apertures 52.

The separation member access means according to the present invention provides a simple and convenient method of emptying collected particles from two chambers simultaneously, namely larger particles deposited in the cyclone chamber (i.e. on top of the particle separation member) and finer particles deposited in the particle receiving chamber. This provides a simple and convenient automatic method of emptying dual chambers.

The superimposed particle separation member according to the present invention also provides a convenient method for emptying collected particles from two chambers simultaneously. To enhance the convenience, the movement of the superimposed members may be linked to open when the bin is removed from the main casing.

While the above description constitutes the preferred embodiments, it will be appreciated that the present invention is susceptible to modification and change without departing from the fair meaning of the proper scope of the accompanying claims.

## Claims

1. A separator for separating entrained particles from a fluid flow, the separator comprising:

(a) a cyclone chamber (46) for containing a cyclonic flow in a cyclonic flow region (48), the cyclonic flow region (48) having an inner wall (38), a radial width (76), an outer peripheral portion (70), a medial portion (74) disposed interior of the peripheral portion (70) and an inner portion (72) disposed interior of the medial portion (74);
(b) means (34) for introducing a fluid flow to the cyclone flow region (48) for cyclonic rotation therein; and
(c) means (36) for removing the fluid flow from the cyclone chamber (46);
**characterised by**:
(d) particle receiving means (50) disposed beneath the cyclone flow region (48) for receiving particles separated from the fluid flow; and
(e) separation means (40) disposed beneath at least a portion of the cyclone flow region (48) and positioned to be contacted by the cyclonic flow in the cyclonic flow region (48) and configured to inhibit re-entrainment of particles from the particle receiving means (50) to the cyclonic flow region (48), the separation means (40) having apertures (52) and being positioned to connect the particle receiving means (50) in flow communication with the cyclonic flow region (48) such that, in operation, particles pass through the apertures (52) to the particle receiving means (50).

2. The separator of claim 1, wherein the apertures (52) have a perimeter defined by the separation means (40).

3. The separator of claim 1 or claim 2, wherein the separation means (40) essentially isolates the particle receiving means (50) from the cyclone chamber (46) except for the apertures (52) associated with the separation means (40).

4. The separator of any of claims 1 to 3, wherein the particle receiving means (50) comprises a sealed chamber except for the apertures (52) and the separator further comprises emptying means (112) for emptying the particle receiving means.

5. The separator of any of claims 1 to 4, further comprising means (66) for connecting the particle receiving means (50) in flow communication with a conduit for transporting separated particles downstream from the particle receiving means (50).

6. The separator of any of claims 1 to 5, further comprising aerodynamic means (56, 58) associated with the apertures (52) for directing particles from the cyclonic flow region (48) into the particle receiving means (50).

7. The separator of any of claims 1 to 6, wherein the particle separating means (40) extends under all of the cyclonic flow region (48) to define a bottom surface of the cyclonic flow region (48).

8. The separator of any of claims 1 to 7, wherein the apertures (52) are positioned beneath only one or both of the peripheral (70) and inner portions (72) of the cyclonic flow region (48).

9. The separator of any of claims 1 to 8, wherein the apertures (52) are distributed regularly around the separating means (40).

10. The separator of any of claims 1 to 8, wherein the fluid contacts only a portion of the separating means (40) and the apertures (52) are positioned only in said portion.

11. The separator of any of claims 1 to 10, wherein the apertures (52) comprise openings in the separation means (40).

12. The separator of any of claims 1 to 11, further comprising:

    (a) a cleaner head (202) adapted for movement over a floor and having a fluid nozzle (220) positionable adjacent the floor, the nozzle (220) in fluid flow communication via a passageway (226) with the means (34) for introducing a fluid flow to the cyclone flow region (48);
    (b) a handle (208) for moving the cleaner head over the floor; and,
    (c) a casing (206) for housing the cyclone chamber whereby the separator forms a dirt filter for a vacuum cleaner (200).

13. The separator of claim 12, wherein the casing (206) is pivotally mounted to the cleaner head (202) and the vacuum cleaner (200) is an upright vacuum cleaner.

14. The separator of any of claims 1 to 13, wherein the apertures (52) are sized to inhibit elongate particles from passing therethrough, whereby elongate particles collect on top of the separation means (40).

15. The separator of claim 14, wherein the apertures (52) comprise slits having longitudinally extending upstream and downstream edges (56, 58) relative to the fluid flow and transversely extending sides (57) and the edges (56, 58) are longer than the sides (57).

16. The separator of claim 15, wherein the length of the edges (56, 58) are substantially aligned with the radial width (76) of the cyclone chamber (46).

**17.** The separator of claim 15, wherein the length of the edges (57) define a longitudinally extending axis which are at an angle of up to 45° to the radius of the cyclonic flow region (48).

**18.** The separator of any of claims 14 to 17, wherein the apertures (52) have a radial outer end (82) and a radial inner end (84) and the radial outer end (82) is positioned adjacent the outer wall of the cyclone chamber (46).

**19.** The separator of any of claims 14 to 17, wherein the apertures (52) have an upstream edge (56) and downstream edge (58), relative to the fluid flow and the thickness of the particle separating member is reduced adjacent the upstream edge (56) of the apertures (52).

**20.** The separator of claim 19, wherein the separation means (40) has an upper surface (42) and a lower surface (44) and the upper surface (42) is angled towards the particle receiving means (50) adjacent the upstream edge (56) and the lower surface (44) is angled away from the aperture (52) adjacent the downstream edge (58).

**21.** The separator of any of claims 1 to 20, wherein the separation means (40) is disposed substantially perpendicularly to a longitudinal axis of the cyclonic flow region (48).

**22.** The separator of any of claims 1 to 21, wherein the separator is constructed to reduce turbulent fluid flow in the vicinity of the apertures (52).

**23.** The separator of claim 22, further comprising a fluid pump (224) for causing the fluid to flow through the separator wherein the fluid flow through the cyclone chamber (46) is pulsed.

**24.** The separator of claim 22, further comprising a moveable closure member (120) on one of means (34) for introducing a fluid flow to the cyclone flow region (48) and means (36) for removing the fluid flow from the cyclone flow region (48) for causing a pulsed fluid flow through the cyclone chamber (46).

**25.** The separator of any of claims 1 to 24, wherein the separation means (40) has from 5 to 35 apertures (52).

**26.** The separator of any of claims 14 to 20 or 25 or any of claims 21 to 24 when appendant to claim 14, wherein the number of apertures (52) in the separation means (40) is calculated by the formula:

$$\text{number of apertures} = \frac{H}{D} \times 4 \pm 20\%$$

where H= the vertical height of the cyclonic flow region (48)

D= the diameter of the cyclone chamber (46)

**27.** The separator of any of claims 14 to 20, 25 or 26 or any of claims 21 to 24 when appendant to claim 14, wherein the cyclone chamber (46) has a diameter and each aperture (52) has a longitudinally extending upstream edge (56) and a longitudinally extending downstream edge (58), relative to the fluid flow, and transverse sides (57) extending between the edges (56, 58), the edges (56, 58) have a length which is less than 10% of the diameter of the cyclone chamber (46) and the sides (57) have a length which is 25 - 35% of the length of the edges (56, 58).

**28.** The separator of claim 27, wherein the edges (57) are substantially radially aligned with the cyclone chamber (46).

**29.** The separator of any of claims 14 to 20, 25 to 28 or any of claims 21 to 24 when appendant to claim 14, wherein each aperture (52) has an upstream edge (56) and a downstream edge (57), relative to the fluid flow, and the upstream edge (56) is angled towards the particle receiving means (50), the included angle between the upstream edge (56) and the upper surface (42) of the separation means (40) is from 15 to 90°.

**30.** The separator of any of claims 14 to 20, 25 to 29 or any of claims 21 to 24 when appendant to claim 14, wherein each aperture (52) has an upstream edge (56) and a downstream edge (58), relative to the fluid flow, and the downstream edge (58) is angled towards the particle receiving means (50), the included angle between the downstream edge (58) and the upper surface (42) of the separation means (40) is from 15 to 90°.

**31.** The separator of any of claims 1 to 30, wherein the fluid flow changes direction and travels to means (36) for removing the fluid flow from the cyclone chamber (46) at a position as it travels over the separation means (40) and the separator further comprising a baffle (100) positioned beneath the separation means (40) at a position 10 to 20° downstream of the position at which the fluid flow changes direction.

**32.** The separator of claim 31, wherein the separation receiving means (50) has a bottom to comprise a sealed chamber except for the apertures and the baffle extends between the separation means (40) and the bottom of the separation receiving means (50).

**33.** The separator of any of claims 1 to 32, including means for reducing the thickness of the boundary layer of fluid as it travels over the separation means.

34. The separator of claim 33, wherein the means for reducing the thickness of the boundary layer comprises means (224, 120) for pulsing the fluid flow through the cyclone chamber (46).

35. The separator of claim 34, wherein the means for pulsing the fluid flow through the cyclone chamber (46) comprises means for pulsing an electrical signal to the fluid pump means (224).

36. The separator of claim 34, wherein the means for pulsing the fluid flow through the cyclone chamber (46) comprises means for cyclically opening and closing one of the means (34) for introducing a fluid flow to the cyclone flow region (48) and the means (36) for removing the fluid flow from the cyclone chamber (46).

37. The separator of claim 33, wherein the means for reducing the thickness of the boundary layer comprises constructing and positioning the apertures (52) to reduce turbulent fluid flow over the separation means (40).

38. The separator of claim 33, wherein the means for reducing the thickness of the boundary layer comprises constructing and positioning flow disruption means (100) beneath the separation means (40) for disrupting cyclonic fluid flow in the particle receiving means.

39. The separator of claim 33, wherein the apertures (52) are aerodynamically shaped for directing particles from the cyclonic flow region (48) into the particle receiving means (50).

40. The separator of any of the preceding claims, further comprising at least one baffle means (100) positioned beneath the separation means (40).

41. The separator of claim 40, comprising a plurality of baffle means (100) positioned beneath the separation means (40).

42. The separator of claim 41, comprising a plurality of baffle means (100) positioned in the particle receiving means (50).

43. The separator of any of claims 40 to 42, wherein the baffle means (100) depend downwardly from the separation means (40).

44. The separator of claim 43, wherein the particle receiving means (50) has a bottom surface (90) and the baffle means (100) are spaced from said bottom surface (90) to define an open area between the baffle means (100) and the bottom surface (90).

45. The separator of claim 44, wherein the baffle means (100) extend to a position adjacent said bottom surface (90).

46. The separator of any of claims 40 to 45, wherein a baffle means (100) is disposed adjacent each aperture (52).

47. The separator of any of claims 40 to 46, wherein the baffle means (100) are disposed downstream of said apertures (52).

48. The separator of any of claims 40 to 47, wherein the apertures (52) have a longitudinal length and the baffle means (100) comprise a main body (102) and a second portion (104), the main body portion (102) has at least the same longitudinal length as said apertures (52) and extends in a direction transverse to air flow along the upper surface (42) of the separation means (40) and the second portion (104) extends at an angle to the main body portion (102) at a position that does not underlie the aperture (52).

49. The separator of claim 48, wherein the second portion (104) is disposed substantially perpendicularly to the main body portion (102).

50. The separator of claim 48 or claim 49, wherein the second portion (104) extends upstream from the main body portion (102).

51. The separator of claim 47, wherein the apertures (52) have longitudinally extending upstream and downstream edges (56, 58) and the baffle means (100) have a portion that is at least the same length as the edges (56, 58).

52. The separator of any of the preceding claims, wherein the apertures (52) comprise slits having longitudinally extending upstream and downstream edges (56, 58) relative to the fluid flow and transversely extending sides (57) and the edges (56, 58) are longer than the sides (57).

53. The separator of claim 52, wherein the length of the edges (57) are substantially aligned with the radial width (76) of the cyclone chamber (46).

54. The separator of claim 52, wherein the length of the edges (56, 58) define a longitudinally extending axis which are at an angle of up to 45° to a radial line extending outwardly from the centre of the cyclone chamber (46).

55. The separator of any of claims 1 to 54, further comprising access means (112) for selectively providing access to the particle receiving means (50) via the separation means (40).

56. The separator of claim 55, wherein the access means (112) forms part of the separation means (40) and, when in the open position, provides an opening between the particle receiving means (50) and the cyclone chamber (46).

57. The separator of claim 55 or claim 56, wherein the access means (112) is freely moveable between its open and closed positions whereby the access means (112) moves to its open position when the chamber (46) is inverted.

58. The separator of claim 55, wherein the access means (112) has a connecting portion (114) which is pivotally connected to the separation means (40).

59. The separator of claim 58, further comprising a weighted member (116) connected to the access means (112) at a position spaced from the connecting portion (114).

60. The separator of claim 55, wherein the access means (112) and the separation means (40) form a surface that underlies all of the cyclonic flow region (48).

61. The separator of claim 55, wherein the access means (112) comprises a chord section of the separation means (40).

62. The separator of any of the preceding claims, wherein the apertures (52) are positioned at least beneath the inner portion (72) of the cyclonic flow region (48).

63. The separator of any of the preceding claims, wherein the apertures are positioned essentially only beneath the peripheral portion of the cyclonic flow region.

64. The separator of any of the preceding claims, wherein the apertures are positioned essentially only beneath the inner portion of the cyclonic flow region.

65. The separator of any of the preceding claims, wherein the apertures are positioned beneath only the peripheral and inner portions of the cyclonic flow region.

**Patentansprüche**

1. Trennvorrichtung zum Trennen mitgeführter Partikel aus einem Fluidstrom, wobei die Trennvorrichtung Folgendes umfasst:

(a) eine Zyklonkammer (46), um einen Zyklonstrom in einem Zyklonstrombereich (48) zu enthalten, wobei der Zyklonstrombereich (48) eine innere Wand (38), eine radiale Breite (76), einen äußeren Umfangsabschnitt (70), einen mittleren Abschnitt (74), der innenliegend zum Umfangsabschnitt (70) angeordnet ist, und einen inneren Abschnitt (72) aufweist, der innenliegend zum mittleren Abschnitt (74) angeordnet ist;

(b) ein Mittel (34) zum Einführen eines Fluidstroms in den Zyklonstrombereich (48) für eine Zyklonrotation in demselben; und

(c) ein Mittel (36) zum Entfernen des Fluidstroms aus der Zyklonkammer (46); **gekennzeichnet durch**:

(d) ein Partikelaufnahmemittel (50), das unterhalb des Zyklonstrombereiches (48) angeordnet ist, um Partikel aufzunehmen, die von dem Fluidstrom getrennt sind; und

(e) ein Trennmittel (40), das sich unterhalb von mindestens einem Abschnitt des Zyklonstrombereiches (48) befindet und so angeordnet ist, dass es von dem Zyklonstrom in dem Zyklonstrombereich (48) berührt wird, und das so konfiguriert ist, dass es das erneute Mitführen von Partikeln aus dem Partikelaufnahmemittel (50) in den Zyklonstrombereich (48) verhindert, wobei das Trennmittel (40) Öffnungen (52) aufweist und so angeordnet ist, dass es das Partikelaufnahmemittel (50) derart in Strömungskommunikation mit dem Zyklonstrombereich (48) verbindet, dass Partikel bei Betrieb **durch** die Öffnungen (52) zu dem Partikelaufnahmemittel (50) strömen.

2. Trennvorrichtung nach Anspruch 1, wobei die Öffnungen (52) einen Umfang aufweisen, der durch das Trennmittel (40) definiert wird.

3. Trennvorrichtung nach Anspruch 1 oder Anspruch 2, wobei das Trennmittel (40) im Wesentlichen das Partikelaufnahmemittel (50) von der Zyklonkammer (46) isoliert, abgesehen von den Öffnungen (52), die zu dem Trennmittel (40) gehören.

4. Trennvorrichtung nach einem der Ansprüche 1 bis 3, wobei das Partikelaufnahmemittel (50) eine bis auf die Öffnungen (52) abgedichtete Kammer umfasst und die Trennvorrichtung des Weiteren ein Entleerungsmittel (112) zum Entleeren des Partikelaufnahmemittels umfasst.

**5.** Trennvorrichtung nach einem der Ansprüche 1 bis 4, die des Weiteren ein Mittel (66) zum Verbinden des Partikelaufnahmemittels (50) in Strömungskommunikation mit einer Leitung zur Beförderung von getrennten Partikeln stromabwärts aus dem Partikelaufnahmemittel (50) umfasst.

**6.** Trennvorrichtung nach einem der Ansprüche 1 bis 5, die des Weiteren ein zu den Öffnungen (52) gehörendes aerodynamisches Mittel (56, 58) umfasst, um Partikel aus dem Zyklonstrombereich (48) in das Partikelaufnahmemittel (50) zu leiten.

**7.** Trennvorrichtung nach einem der Ansprüche 1 bis 6, wobei sich das Partikeltrennmittel (40) unter den gesamten Zyklonstrombereich (48) erstreckt, um eine untere Fläche des Zyklonstrombereichs (48) abzugrenzen.

**8.** Trennvorrichtung nach einem der Ansprüche 1 bis 7, wobei die Öffnungen (52) unterhalb entweder nur des Umfangsabschnitts (70) oder des inneren Abschnitts (72) des Zyklonstrombereiches (48) oder unter diesen beiden Abschnitten angeordnet sind.

**9.** Trennvorrichtung nach einem der Ansprüche 1 bis 8, wobei die Öffnungen (52) regelmäßig um das Trennmittel (40) herum verteilt sind.

**10.** Trennvorrichtung nach einem der Ansprüche 1 bis 8, wobei das Fluid nur einen Abschnitt des Trennmittels (40) berührt und die Öffnungen (52) nur in diesem Abschnitt angeordnet sind.

**11.** Trennvorrichtung nach einem der Ansprüche 1 bis 10, wobei die Öffnungen (52) Löcher in dem Trennmittel (40) umfassen.

**12.** Trennvorrichtung nach einem der Ansprüche 1 bis 11, die des Weiteren Folgendes umfasst:

(a) einen Reinigungskopf (202), der zur Bewegung über einen Boden ausgelegt ist und eine Fluiddüse (220) aufweist, die benachbart zum Boden angeordnet werden kann, wobei die Düse (220) über einen Durchgang (226) in Fluidstromkommunikation mit dem Mittel (34) zum Einführen eines Fluidstroms in den Zyklonstrombereich (48) steht;

(b) einen Griff (208) zur Bewegung des Reinigungskopfes über den Boden; und

(c) ein Gehäuse (206) zur Aufnahme der Zyklonkammer, wobei die Trennvorrichtung einen Schmutzfilter für einen Staubsauger (200) bildet.

**13.** Trennvorrichtung nach Anspruch 12, wobei das Gehäuse (206) gelenkig am Reinigungskopf (202) befestigt ist und der Staubsauger (200) ein aufrechter Staubsauger ist.

**14.** Trennvorrichtung nach einem der Ansprüche 1 bis 13, wobei die Öffnungen (52) so bemessen sind, dass sie den Durchgang länglicher Partikel durch diese hindurch verhindern, wobei sich längliche Partikel oben auf dem Trennmittel (40) sammeln.

**15.** Trennvorrichtung nach Anspruch 14, wobei die Öffnungen (52) Schlitze umfassen, die eine sich längs erstreckende, im Verhältnis zum Fluidstrom stromaufwärts gerichtete und eine sich längs erstreckende, im Verhältnis zum Fluidstrom stromabwärts gerichtete Kante (56, 58) und sich quer erstreckende Seiten (57) aufweisen und die Kanten (56, 58) länger als die Seiten (57) sind.

**16.** Trennvorrichtung nach Anspruch 15, wobei die Länge der Kanten (56, 58) im Wesentlichen zu der radialen Breite (76) der Zyklonkammer (46) ausgerichtet ist.

**17.** Trennvorrichtung nach Anspruch 15, wobei die Länge der Kanten (57) sich längs erstreckende Achsen abgrenzt, die sich in einem Winkel von bis zu 45° zum Radius des Zyklonstrombereiches (48) befinden.

**18.** Trennvorrichtung nach einem der Ansprüche 14 bis 17, wobei die Öffnungen (52) ein radiales äußeres Ende (82) und ein radiales inneres Ende (84) aufweisen und das radiale äußere Ende (82) benachbart zur Außenwand der Zyklonkammer (46) angeordnet ist.

**19.** Trennvorrichtung nach einem der Ansprüche 14 bis 17, wobei die Öffnungen (52) eine im Verhältnis zum Fluidstrom stromaufwärts gerichtete Kante (56) und eine im Verhältnis zum Fluidstrom stromabwärts gerichtete Kante (58) aufweisen und die Stärke des Partikeltrennmittels benachbart zur stromaufwärts gerichteten Kante (56) der Öffnungen (52) verringert ist.

**20.** Trennvorrichtung nach Anspruch 19, wobei das Trennmittel (40) eine obere Fläche (42) und eine untere Fläche (44) aufweist und die obere Fläche (42) in Richtung des Partikelaufnahmemittels (50) benachbart zur stromaufwärts gerichteten Kante (56) abgewinkelt ist und die untere Fläche (44) benachbart zur stromabwärts gerichteten Kante (58) von der Öffnung (52) weg abgewinkelt ist.

**21.** Trennvorrichtung nach einem der Ansprüche 1 bis 20, wobei das Trennmittel (40) im Wesentlichen senkrecht zu einer Längsachse des Zyklonstrombereichs (48) angeordnet ist.

**22.** Trennvorrichtung nach einem der Ansprüche 1 bis 21, wobei die Trennvorrichtung so konstruiert ist, dass die Fluidwirbelströmung in der Nähe der Öffnungen (52) verringert wird.

**23.** Trennvorrichtung nach Anspruch 22, die des Weiteren eine Fluidpumpe (224) umfasst, um zu verursachen, dass das Fluid durch die Trennvorrichtung strömt, wobei der Fluidstrom durch die Zyklonkammer (46) pulsiert.

**24.** Trennvorrichtung nach Anspruch 22, die des Weiteren ein bewegliches Verschlusselement (120) an einem des Mittels (34) zur Einführung eines Fluidstroms in den Zyklonstrombereich (48) und des Mittels (36) zum Entfernen des Fluidstroms aus dem Zyklonstrombereich (48) umfasst, um einen pulsierenden Fluidstrom durch die Zyklonkammer (46) zu verursachen.

**25.** Trennvorrichtung nach einem der Ansprüche 1 bis 24, wobei das Trennmittel (40) 5 bis 35 Öffnungen (52) aufweist.

**26.** Trennvorrichtung nach einem der Ansprüche 14 bis 20 oder 25 oder nach einem der Ansprüche 21 bis 24, wenn sie zu Anspruch 14 gehören, wobei die Anzahl der Öffnungen (52) im Trennmittel (40) mit folgender Formel berechnet wird:

$$\text{Anzahl der Öffnungen} = \frac{H}{D} \times 4 \pm 20\%$$

wobei H = vertikale Höhe des Zyklonstrombereiches (48)
D = Durchmesser der Zyklonkammer (46)

**27.** Trennvorrichtung nach einem der Ansprüche 14 bis 20, 25 oder 26 oder nach einem der Ansprüche 21 bis 24, wenn sie zu Anspruch 14 gehören, wobei die Zyklonkammer (46) einen Durchmesser aufweist und jede Öffnung (52) eine sich im Verhältnis zum Fluidstrom längs erstreckende stromaufwärts gerichtete Kante (56) und eine sich im Verhältnis zum Fluidstrom längs erstreckende stromabwärts gerichtete Kante (58) und sich zwischen den Kanten (56, 58) erstreckende quer verlaufende Seiten (57) aufweist, wobei die Kanten (56, 58) eine Länge aufweisen, die weniger als 10% des Durchmessers der Zyklonkammer (46) beträgt, und die Seiten (57) eine Länge aufweisen, die 25-35% der Länge der Kanten (56, 58) beträgt.

**28.** Trennvorrichtung nach Anspruch 27, wobei die Kanten (57) im Wesentlichen radial mit der Zyklonkammer (46) ausgerichtet sind.

**29.** Trennvorrichtung nach einem der Ansprüche 14 bis 20, 25 bis 28 oder nach einem der Ansprüche 21 bis 24, wenn sie zu Anspruch 14 gehören, wobei jede Öffnung (52) eine im Verhältnis zum Fluidstrom stromaufwärts gerichtete Kante (56) und eine im Verhältnis zum Fluidstrom stromabwärts gerichtete Kante (57) aufweist und die stromaufwärts gerichtete Kante (56) in Richtung des Partikelaufnahmemittels (50) abgewinkelt ist, wobei der eingeschlossene Winkel zwischen der stromaufwärts gerichteten Kante (56) und der oberen Fläche (42) des Trennmittels (40) 15 bis 90° beträgt.

**30.** Trennvorrichtung nach einem der Ansprüche 14 bis 20, 25 bis 29 oder nach einem der Ansprüche 21 bis 24, wenn sie zu Anspruch 14 gehören, wobei jede Öffnung (52) eine im Verhältnis zum Fluidstrom stromaufwärts gerichtete Kante (56) und eine im Verhältnis zum Fluidstrom stromabwärts gerichtete Kante (58) aufweist und die stromabwärts gerichtete Kante (58) in Richtung des Partikelaufnahmemittels (50) abgewinkelt ist, wobei der eingeschlossene Winkel zwischen der stromabwärts gerichteten Kante (58) und der oberen Fläche (42) des Trennmittels (40) 15 bis 90° beträgt.

**31.** Trennvorrichtung nach einem der Ansprüche 1 bis 30, wobei der Fluidstrom die Richtung wechselt und zum Mittel (36) zur Entfernung des Fluidstroms aus der Zyklonkammer (46) an einer Position strömt, während er über das Trennmittel (40) strömt, und die Trennvorrichtung des Weiteren eine Prallplatte (100) umfasst, die unterhalb des Trennmittels (40) in einer Position angeordnet ist, die sich 10° bis 20° stromabwärts von der Position befindet, in der der Fluidstrom die Richtung wechselt.

**32.** Trennvorrichtung nach Anspruch 31, wobei das Trennungsaufnahmemittel (50) einen Boden aufweist, um eine abgesehen von den Öffnungen abgedichtete Kammer zu umfassen, und sich die Prallplatte zwischen dem Trennmittel (40) und dem Boden des Trennungsaufnahmemittels erstreckt.

**33.** Trennvorrichtung nach einem der Ansprüche 1 bis 32, die ein Mittel zur Verringerung der Stärke der Grenzschicht von Fluid, während dieses über das Trennmittel strömt, umfasst.

**34.** Trennvorrichtung nach Anspruch 33, wobei das Mittel zur Verringerung der Stärke der Grenzschicht Mittel (224, 120) umfasst, um den Fluidstrom durch die Zyklonkammer (46) pulsieren zu lassen.

**35.** Trennvorrichtung nach Anspruch 34, wobei das Mittel zum Pulsieren des Fluidstroms durch die Zyklonkammer (46) ein Mittel zum Pulsieren eines elektrischen Signals zum Fluidpumpenmittel (224) umfasst.

**36.** Trennvorrichtung nach Anspruch 34, wobei das Mittel zum Pulsieren des Fluidstroms durch die Zyklonkammer (46) ein Mittel zum zyklischen Öffnen und Schließen eines des Mittels (34) zum Einführen eines Fluidstroms in den Zyklonstrombereich (48) und des Mittels (36) zum Entfernen des Fluidstroms aus der Zyklonkammer (46) umfasst.

**37.** Trennvorrichtung nach Anspruch 33, wobei das Mittel zum Verringern der Stärke der Grenzschicht das Konstruieren und Anordnen der Öffnungen (52) umfasst, um die Fluidwirbelströmung über dem Trennmittel (40) zu verringern.

**38.** Trennvorrichtung nach Anspruch 33, wobei das Mittel zum Verringern der Stärke der Grenzschicht das Konstruieren und Anordnen des Stromunterbrechungsmittels (100) unterhalb des Trennmittels (40) umfasst, um den Zyklonfluidstrom in dem Partikelaufnahmemittel zu unterbrechen.

**39.** Trennvorrichtung nach Anspruch 33, wobei die Öffnungen (52) aerodynamisch geformt sind, um Partikel aus dem Zyklonstrombereich (48) in das Partikelaufnahmemittel (50) zu leiten.

**40.** Trennvorrichtung nach einem der vorhergehenden Ansprüche, die des Weiteren mindestens ein Prallplattenmittel (100) umfasst, das unterhalb des Trennmittels (40) angeordnet ist.

**41.** Trennvorrichtung nach Anspruch 40, die eine Vielzahl von Prallplattenmitteln (100) umfasst, die unterhalb des Trennmittels (40) angeordnet sind.

**42.** Trennvorrichtung nach Anspruch 41, die eine Vielzahl von Prallplattenmitteln (100) umfasst, die in dem Partikelaufnahmemittel (50) angeordnet sind.

**43.** Trennvorrichtung nach einem der Ansprüche 40 bis 42, wobei die Prallplattenmittel (100) von dem Trennmittel (40) herabhängen.

**44.** Trennvorrichtung nach Anspruch 43, wobei das Partikelaufnahmemittel (50) eine untere Fläche (90) aufweist und die Prallplattenmittel (100) von der unteren Fläche (90) beabstandet sind, um einen offenen Bereich zwischen den Prallplattenmitteln (100) und der unteren Fläche (90) abzugrenzen.

**45.** Trennvorrichtung nach Anspruch 44, wobei sich die Prallplattenmittel (100) zu einer Position benachbart zur unteren Fläche (90) erstrecken.

**46.** Trennvorrichtung nach einem der Ansprüche 40 bis 45, wobei ein Prallplattenmittel (100) benachbart zu jeder Öffnung (52) angeordnet ist.

**47.** Trennvorrichtung nach einem der Ansprüche 40 bis 46, wobei die Prallplattenmittel (100) stromabwärts von den Öffnungen (52) angeordnet sind.

**48.** Trennvorrichtung nach einem der Ansprüche 40 bis 47, wobei die Öffnungen (52) eine Länge in Längsrichtung aufweisen und die Prallplattenmittel (100) einen Hauptkörper (102) und einen zweiten Abschnitt (104) umfassen, wobei der Hauptkörperabschnitt (102) mindestens dieselbe längliche Länge aufweist wie die Öffnungen (52) und sich in einer Richtung erstreckt, die quer zum Luftstrom entlang der oberen Fläche (42) des Trennmittels (40) verläuft, und sich der zweite Abschnitt (104) in einem Winkel zum Hauptkörperabschnitt (102) in einer Position erstreckt, die nicht unter der Öffnung (52) liegt.

**49.** Trennvorrichtung nach Anspruch 48, wobei der zweite Abschnitt (104) im Wesentlichen senkrecht zum Hauptkörperabschnitt (102) angeordnet ist.

**50.** Trennvorrichtung nach Anspruch 48 oder Anspruch 49, wobei sich der zweite Abschnitt (104) stromaufwärts vom Hauptkörperabschnitt (102) erstreckt.

**51.** Trennvorrichtung nach Anspruch 47, wobei die Öffnungen (52) eine sich längs erstreckende stromaufwärts gerichtete und eine sich längs erstreckende stromabwärts gerichtete Kante (56, 58) aufweisen und die Prallplattenmittel (100) einen Abschnitt aufweisen, der mindestens dieselbe Länge wie die Kanten (56, 58) aufweist.

**52.** Trennvorrichtung nach einem der vorhergehenden Ansprüche, wobei die Öffnungen (52) Schlitze umfassen, die eine sich im Verhältnis zum Fluidstrom längs erstreckende stromaufwärts gerichtete und eine sich im Verhältnis zum Fluidstrom stromabwärts gerichtete Kante (56, 58) und sich quer erstreckende Seiten (57) aufweisen und die Kanten (56, 58) länger als die Seiten (57) sind.

**53.** Trennvorrichtung nach Anspruch 52, wobei die Länge der Kanten (57) im Wesentlichen zu der radialen Breite (76) der Zyklonkammer (46) ausgerichtet ist.

**54.** Trennvorrichtung nach Anspruch 52, wobei die Länge der Kanten (56, 58) sich längs erstreckende Achsen abgrenzt, die in einem Winkel von bis zu 45° zu einer radialen Linie verlaufen, die sich von der Mitte der Zyklonkammer (46) auswärts erstreckt.

**55.** Trennvorrichtung nach einem der Ansprüche 1 bis 54, die des Weiteren ein Zugriffsmittel (112) umfasst, um über das Trennmittel (40) selektiv Zugriff auf das Partikelaufnahmemittel (50) bereitzustellen.

**56.** Trennvorrichtung nach Anspruch 55, wobei das Zugriffsmittel (112) einen Teil des Trennmittels (40) bildet und, wenn es sich in der offenen Position befindet, eine Öffnung zwischen dem Partikelaufnahmemittel (50) und der Zyklonkammer (46) bereitstellt.

**57.** Trennvorrichtung nach Anspruch 55 oder Anspruch 56, wobei das Zugriffsmittel (112) zwischen seiner offenen und seiner geschlossenen Position frei beweglich ist und sich das Zugriffsmittel (112) in seine offene Position bewegt, wenn die Kammer (46) umgekehrt wird.

**58.** Trennvorrichtung nach Anspruch 55, wobei das Zugriffsmittel (112) einen Verbindungsabschnitt (114) aufweist, der gelenkig mit dem Trennmittel (40) verbunden ist.

**59.** Trennvorrichtung nach Anspruch 58, die des Weiteren ein Gewichtselement (116) umfasst, das mit dem Zugriffsmittel (112) in einer Position verbunden ist, die von dem Verbindungsabschnitt (114) beabstandet ist.

**60.** Trennvorrichtung nach Anspruch 55, wobei das Zugriffsmittel (112) und das Trennmittel (40) eine Fläche bilden, die unter dem gesamten Zyklonstrombereich (48) liegt.

**61.** Trennvorrichtung nach Anspruch 55, wobei das Zugriffsmittel (112) einen Sehnenabschnitt des Trennmittels (40) umfasst.

**62.** Trennvorrichtung nach einem der vorhergehenden Ansprüche, wobei die Öffnungen (52) mindestens unterhalb des inneren Abschnitts (72) des Zyklonstrombereichs (48) angeordnet sind.

**63.** Trennvorrichtung nach einem der vorhergehenden Ansprüche, wobei die Öffnungen im Wesentlichen nur unterhalb des Umfangsabschnitts des Zyklonstrombereichs angeordnet sind.

**64.** Trennvorrichtung nach einem der vorhergehenden Ansprüche, wobei die Öffnungen im Wesentlichen nur unterhalb des inneren Abschnitts des Zyklonstrombereichs angeordnet sind.

**65.** Trennvorrichtung nach einem der vorhergehenden Ansprüche, wobei die Öffnungen nur unterhalb des Umfangsabschnitts und des inneren Abschnitts des Zyklonstrombereiches angeordnet sind.

**Revendications**

**1.** Séparateur servant à séparer des particules entraînées à partir d'un flux de fluide, le séparateur comprenant :

(a) une chambre à cyclone (46) servant à contenir un flux cyclonique dans une zone de flux cyclonique (48), la zone de flux cyclonique (48) possédant une paroi interne (38), une largeur radiale (76), une partie périphérique externe (70), une partie médiane (74) qui est disposée à l'intérieur de la partie périphérique (70) et une partie interne (72) qui est disposée à l'intérieur de la partie médiane (74) ;
(b) un moyen (34) servant à amener un flux de fluide vers la zone de flux cyclonique (48) afin d'y assurer une rotation cyclonique ; et
(c) un moyen (36) servant à éliminer le flux de fluide de la chambre à cyclone (46) ;
**caractérisé par** :
(d) un moyen de réception de particules (50) qui est disposé sous la zone de flux cyclonique (48) afin de recevoir les particules qui sont séparées du flux de fluide ; et
(e) un moyen de séparation (40) qui est disposé sous une partie au moins de la zone de flux cyclonique (48), et est positionné de façon à ce que le flux cyclonique entre en contact avec lui dans la zone de flux cyclonique (48) et configuré pour empêcher tout ré-entraînement des particules à partir du moyen de réception de particules (50) vers la zone de flux cyclonique (48), le moyen de séparation (40) ayant des ouvertures (52) et étant positionné pour raccorder le moyen de réception de particules (50) selon une communication de flux avec la zone de flux cyclonique (48), de sorte que, lors du fonctionnement, des particules passent à travers les ouvertures (52) jusqu'au moyen de réception de particules (50).

**2.** Le séparateur de la revendication 1, dans lequel le périmètre des ouvertures (52) est défini par le moyen de séparation (40).

**3.** Le séparateur de la revendication 1 ou de la revendication 2, dans lequel le moyen de séparation (40) isole essentiellement le moyen de réception de particules (50) par rapport à la chambre à cyclone (46) à l'exception des ouvertures (52) qui sont associées au moyen de séparation (40).

**4.** Le séparateur de l'une quelconque des revendications 1 à 3, dans lequel le moyen de réception de particules (50) comporte une chambre hermétique exception faite des ouvertures (52) et le séparateur comporte en outre un moyen de vidage (112) servant à vider le moyen de réception de particules.

5. Le séparateur de l'une quelconque des revendications 1 à 4, comprenant en outre un moyen (66) servant à raccorder le moyen de réception de particules (50) selon une communication de flux avec un conduit servant à transporter les particules séparées en aval à partir du moyen de réception de particules (50).

6. Le séparateur de l'une quelconque des revendications 1 à 5, comprenant en outre des moyens aérodynamiques (56, 58) associés aux ouvertures (52) afin de diriger les particules à partir de la zone de flux cyclonique (48) vers le moyen de réception de particules (50).

7. Le séparateur de l'une quelconque des revendications 1 à 6, dans lequel le moyen de séparation de particules (40) s'étend sous la totalité de la zone de flux cyclonique (48) afin de définir une surface inférieure de la zone de flux cyclonique (48).

8. Le séparateur de l'une quelconque des revendications 1 à 7, dans lequel les ouvertures (52) sont positionnées sous l'une seulement des parties périphérique (70) et interne (72), ou sous les deux, de la zone de flux cyclonique (48).

9. Le séparateur de l'une quelconque des revendications 1 à 8, dans lequel les ouvertures (52) sont réparties à des intervalles réguliers autour du moyen de séparation (40).

10. Le séparateur de l'une quelconque des revendications 1 à 8, dans lequel le fluide entre uniquement en contact avec une partie du moyen de séparation (40) et les ouvertures (52) sont uniquement positionnées dans ladite partie.

11. Le séparateur de l'une quelconque des revendications 1 à 10, dans lequel les ouvertures (52) comportent des ouvertures qui sont prévues dans le moyen de séparation (40).

12. Le séparateur de l'une quelconque des revendications 1 à 11, comprenant en outre :

(a) une tête de nettoyage (202) qui est adaptée en vue d'un mouvement au-dessus du sol et possédant une buse de fluide (220) qui peut être positionnée de façon adjacente au sol, la buse (220) étant en communication de flux de fluide, par l'intermédiaire d'un passage (226), avec le moyen (34) servant à amener un flux de fluide vers la zone de flux cyclonique (48) ;
(b) une poignée (208) servant à déplacer la tête de nettoyage au-dessus du sol ; et

(c) un carter (206) servant à abriter la chambre à cyclone, cas dans lequel le séparateur constitue un filtre à poussières pour un aspirateur (200).

13. Le séparateur de la revendication 12, dans lequel le carter (206) est monté de façon pivotante sur la tête de nettoyage (202) et l'aspirateur (200) est un aspirateur vertical.

14. Le séparateur de l'une quelconque des revendications 1 à 13, dans lequel les ouvertures (52) sont dimensionnées de façon à empêcher le passage de particules allongées à travers celles-ci, cas dans lequel les particules allongées s'accumulent sur le haut du moyen de séparation (40).

15. Le séparateur de la revendication 14, dans lequel les ouvertures (52) comprennent des fentes possédant des bords amont et aval (56, 58) qui s'étendent dans le plan longitudinal par rapport au flux de fluide, ainsi que des côtés (57) qui s'étendent dans le plan transversal, alors que les bords (56, 58) sont plus longs que les côtés (57).

16. Le séparateur de la revendication 15, dans lequel la longueur des bords (56, 58) est essentiellement alignée avec la largeur radiale (76) de la chambre à cyclone (46).

17. Le séparateur de la revendication 15, dans lequel la longueur des bords (57) définit un axe s'étendant dans le plan longitudinal et se trouvant à un angle pouvant atteindre 45° par rapport au rayon de la zone de flux cyclonique (48).

18. Le séparateur de l'une quelconque des revendications 14 à 17, dans lequel les ouvertures (52) possèdent une extrémité radiale externe (82) et une extrémité radiale interne (84), et l'extrémité radiale externe (82) est positionnée de façon adjacente à la paroi externe de la chambre à cyclone (46).

19. Le séparateur de l'une quelconque des revendications 14 à 17, dans lequel les ouvertures (52) possèdent un bord amont (56) et un bord aval (58) par rapport au flux de fluide et l'épaisseur de l'élément de séparation de particules est réduite à côté du bord amont (56) des ouvertures (52).

20. Le séparateur de la revendication 19, dans lequel le moyen de séparation (40) possède une surface supérieure (42) et une surface inférieure (44), alors que la surface supérieure (42) est inclinée en direction du moyen de réception de particules (50) à côté du bord amont (56) et la surface inférieure (44) est inclinée de façon à s'éloigner de l'ouverture (52) qui est adjacente au bord aval (58).

**21.** Le séparateur de l'une quelconque des revendications 1 à 20, dans lequel le moyen de séparation (40) est disposé dans un plan essentiellement perpendiculaire par rapport à un axe longitudinal de la zone de flux cyclonique (48).

**22.** Le séparateur de l'une quelconque des revendications 1 à 21, dans lequel le séparateur est construit de façon à réduire la turbulence du flux de fluide à proximité des ouvertures (52).

**23.** Le séparateur de la revendication 22, comprenant en outre une pompe à fluide (224) pour obliger le fluide à passer à travers le séparateur, cas dans lequel le flux de fluide traversant la chambre à cyclone (46) est pulsé.

**24.** Le séparateur de la revendication 22, comprenant en outre un élément de fermeture mobile (120) qui est prévu sur l'un des deux moyens, soit le moyen (34) servant à amener un flux de fluide vers la zone de flux cyclonique (48), soit le moyen (36) servant à éliminer le flux de fluide de la zone de flux cyclonique (48), afin d'obliger un flux de fluide pulsé de passer à travers la chambre à cyclone (46).

**25.** Le séparateur de l'une quelconque des revendications 1 à 24, dans lequel le moyen de séparation (40) est muni de 5 à 35 ouvertures (52).

**26.** Le séparateur de l'une quelconque des revendications 14 à 20 ou 25, ou l'une quelconque des revendications 21 à 24 lorsqu'elle est subordonnée à la revendication 14, dans lequel le nombre d'ouvertures (52) prévu dans le moyen de séparation (40) est calculé sur la base de la formule suivante :

$$\text{nombre d'ouvertures} = \frac{H}{D} \times 4 \pm 20\%$$

où
H = la hauteur verticale de la zone de flux cyclonique (48)
D = le diamètre de la chambre à cyclone (46)

**27.** Le séparateur de l'une quelconque des revendications 14 à 20, 25 ou 26, ou l'une quelconque des revendications 21 à 24 lorsqu'elle est subordonnée à la revendication 14, dans lequel la chambre à cyclone (46) a un certain diamètre et chaque ouverture (52) possède un bord amont (56) qui s'étend dans le plan longitudinal et un bord aval (58) qui s'étend dans le plan longitudinal par rapport au flux de fluide, et des côtés transversaux (57) qui s'étendent entre les bords (56, 58), alors que les bords (56, 58) ont une longueur qui est inférieure à 10% du diamètre de la chambre à cyclone (46) et les côtés (57) ont une longueur qui est égale à 25-35% de la longueur des bords (56, 58).

**28.** Le séparateur de la revendication 27, dans lequel les bords (57) sont essentiellement alignés dans le plan radial avec la chambre à cyclone (46).

**29.** Le séparateur de l'une quelconque des revendications 14 à 20, 25 à 28, ou l'une quelconque des revendications 21 à 24 lorsqu'elle est subordonnée à la revendication 14, dans lequel chaque ouverture (52) possède un bord amont (56) et un bord aval (57), par rapport au flux de fluide, et le bord amont (56) est incliné en direction du moyen de réception de particules (50), alors que l'angle aigu formé entre le bord amont (56) et la surface supérieure (42) du moyen de séparation (40) est de 15 à 90°.

**30.** Le séparateur de l'une quelconque des revendications 14 à 20, 25 à 29, ou l'une quelconque des revendications 21 à 24 lorsqu'elle est subordonnée à la revendication 14, dans lequel chaque ouverture (52) possède un bord amont (56) et un bord aval (58), par rapport au flux de fluide, et le bord aval (58) est incliné en direction du moyen de réception de particules (50), alors que l'angle aigu formé entre le bord aval (58) et la surface supérieure (42) du moyen de séparation (40) est de 15 à 90°.

**31.** Le séparateur de l'une quelconque des revendications 1 à 30, dans lequel le flux de fluide change de direction et se déplace vers le moyen (36) servant à éliminer le flux de fluide de la chambre à cyclone (46) au niveau d'une certaine position, au fur et à mesure qu'il passe au-dessus du moyen de séparation (40) et le séparateur comprend en outre un déflecteur (100) lequel est positionné sous le moyen de séparation (40) en un emplacement situé de 10 à 20° en aval de la position à laquelle le flux de fluide change de direction.

**32.** Le séparateur de la revendication 31, dans lequel le moyen de réception de séparation (50) possède un fond afin de comporter une chambre hermétique, à l'exception des ouvertures, et le déflecteur s'étend entre le moyen de séparation (40) et le fond du moyen de réception de séparation (50).

**33.** Le séparateur de l'une quelconque des revendications 1 à 32, comprenant un moyen destiné à réduire l'épaisseur de la couche-limite du fluide au fur et à mesure que celui-ci passe au-dessus du moyen de séparation.

**34.** Le séparateur de la revendication 33, dans lequel le moyen destiné à réduire l'épaisseur de la couche-limite comprend un moyen (224, 120) servant à pulser le flux de fluide à travers la chambre à cyclone (46).

**35.** Le séparateur de la revendication 34, dans lequel le moyen servant à pulser le flux de fluide à travers la chambre à cyclone (46) comprend un moyen servant à pulser un signal électrique vers le moyen de pompe à fluide (224).

**36.** Le séparateur de la revendication 34, dans lequel le moyen servant à pulser le flux de fluide à travers la chambre à cyclone (46) comprend un moyen servant à ouvrir et à fermer de façon cyclique l'un des deux moyens, soit le moyen (34) servant à amener un flux de fluide vers la zone de flux cyclonique (48), soit le moyen (36) servant à éliminer le flux de fluide de la chambre à cyclone (46).

**37.** Le séparateur de la revendication 33, dans lequel le moyen destiné à réduire l'épaisseur de la couche-limite comprend la construction et le positionnement des ouvertures (52) afin de réduire la turbulence du flux de fluide au-dessus du moyen de séparation (40).

**38.** Le séparateur de la revendication 33, dans lequel le moyen destiné à réduire l'épaisseur de la couche-limite comprend la construction et le positionnement d'un moyen de perturbation de flux (100) sous le moyen de séparation (40) afin de perturber le flux de fluide cyclonique dans le moyen de réception de particules.

**39.** Le séparateur de la revendication 33, dans lequel les ouvertures (52) ont une forme aérodynamique afin de diriger les particules à partir de la zone de flux cyclonique (48) vers le moyen de réception de particules (50).

**40.** Le séparateur de l'une quelconque des revendications précédentes, comprenant en outre au moins un moyen de déflecteur (100) lequel est positionné sous le moyen de séparation (40).

**41.** Le séparateur de la revendication 40, comprenant une pluralité de moyens de déflecteurs (100) lesquels sont positionnés sous le moyen de séparation (40).

**42.** Le séparateur de la revendication 41, comprenant une pluralité de moyens de déflecteurs (100) lesquels sont positionnés dans le moyen de réception de particules (50).

**43.** Le séparateur de l'une quelconque des revendications 40 à 42, dans lequel les moyens de déflecteurs (100) sont inclinés vers le bas à partir du moyen de séparation (40).

**44.** Le séparateur de la revendication 43, dans lequel le moyen de réception de particules (50) possède une surface inférieure (90) et le moyen de déflecteur (100) est espacé d'une certaine distance de ladite surface inférieure (90) afin de définir une zone ouverte entre le moyen de déflecteur (100) et la surface inférieure (90).

**45.** Le séparateur de la revendication 44, dans lequel le moyen de déflecteur (100) s'étend vers une position qui est adjacente à ladite surface inférieure (90).

**46.** Le séparateur de l'une quelconque des revendications 40 à 45, dans lequel un moyen de déflecteur (100) est disposé de façon adjacente à chaque ouverture (52).

**47.** Le séparateur de l'une quelconque des revendications 40 à 46, dans lequel les moyens de déflecteurs (100) sont disposés en aval desdites ouvertures (52).

**48.** Le séparateur de l'une quelconque des revendications 40 à 47, dans lequel les ouvertures (52) ont une longueur longitudinale et les moyens de déflecteurs (100) comprennent un corps principal (102) et une deuxième partie (104), alors que la partie de corps principal (102) possède au moins la même longueur longitudinale que lesdites ouvertures (52) et s'étend dans une direction qui est transversale au flux d'air le long de la surface supérieure (42) du moyen de séparation (40) et la deuxième partie (104) s'étend suivant un certain angle par rapport à la partie de corps principal (102) au niveau d'un emplacement qui n'est pas sous-jacent à l'ouverture (52).

**49.** Le séparateur de la revendication 48, dans lequel la deuxième partie (104) est disposée dans un plan essentiellement perpendiculaire par rapport à la partie de corps principal (102).

**50.** Le séparateur de la revendication 48 ou de la revendication 49, dans lequel la deuxième partie (104) s'étend en amont à partir de la partie de corps principal (102).

**51.** Le séparateur de la revendication 47, dans lequel les ouvertures (52) possèdent des bords amont et aval (56, 58) qui s'étendent dans le plan longitudinal, et les moyens de déflecteurs (100) comportent une partie qui a au moins la même longueur que les bords (56, 58).

**52.** Le séparateur de l'une quelconque des revendications précédentes, dans lequel les ouvertures (52) comprennent des fentes possédant des bords amont et aval (56, 58) qui s'étendent dans le plan longitudinal par rapport au flux de fluide, ainsi que des côtés (57) qui s'étendent dans le plan transversal, alors que les bords (56, 58) sont plus longs que les côtés (57).

**53.** Le séparateur de la revendication 52, dans lequel la longueur des bords (57) est essentiellement alignée avec la largeur radiale (76) de la chambre à cyclone (46).

**54.** Le séparateur de la revendication 52, dans lequel la longueur des bords (56, 58) définit un axe s'étendant dans le plan longitudinal et se trouvant à un certain angle pouvant atteindre 45° par rapport à une ligne radiale qui s'étend vers l'extérieur à partir du centre de la chambre à cyclone (46).

**55.** Le séparateur de l'une quelconque des revendications 1 à 54, comprenant en outre un moyen d'accès (112) servant à procurer de façon sélective un accès au moyen de réception de particules (50) par l'intermédiaire du moyen de séparation (40).

**56.** Le séparateur de la revendication 55, dans lequel le moyen d'accès (112) fait partie du moyen de séparation (40), et lorsqu'il se trouve en position ouverte, il offre une ouverture entre le moyen de réception de particules (50) et la chambre à cyclone (46).

**57.** Le séparateur de la revendication 55 ou de la revendication 56, dans lequel le moyen d'accès (112) est capable de se déplacer librement entre sa position ouverte et sa position fermée, cas dans lequel le moyen d'accès (112) se déplace vers sa position ouverte lorsque la chambre (46) est inversée.

**58.** Le séparateur de la revendication 55, dans lequel le moyen d'accès (112) possède une partie de raccordement (114) laquelle est raccordée de façon pivotante au moyen de séparation (40).

**59.** Le séparateur de la revendication 58, comprenant en outre un élément lesté (116) lequel est raccordé au moyen d'accès (112) au niveau d'un emplacement qui est espacé de la partie de raccordement (114).

**60.** Le séparateur de la revendication 55, dans lequel le moyen d'accès (112) et le moyen de séparation (40) constituent une surface qui est sous-jacente à la totalité de la zone de flux cyclonique (48).

**61.** Le séparateur de la revendication 55, dans lequel le moyen d'accès (112) comprend une partie de corde d'arc du moyen de séparation (40).

**62.** Le séparateur de l'une quelconque des revendications précédentes, dans lequel les ouvertures (52) sont au moins positionnées sous la partie interne (72) de la zone de flux cyclonique (48).

**63.** Le séparateur de l'une quelconque des revendications précédentes, dans lequel les ouvertures sont essentiellement positionnées sous la partie périphérique uniquement de la zone de flux cyclonique.

**64.** Le séparateur de l'une quelconque des revendications précédentes, dans lequel les ouvertures sont essentiellement positionnées sous la partie interne uniquement de la zone de flux cyclonique.

**65.** Le séparateur de l'une quelconque des revendications précédentes, dans lequel les ouvertures sont essentiellement positionnées sous les parties périphérique et interne uniquement de la zone de flux cyclonique.

FIG. 1

**FIG. 2**

208

206

212

34

36
210
30
38

42
40
44
90

204

202

**FIG. 3**

220

**FIG. 4**

**FIG. 5**

**FIG. 7**

FIG. 6

FIG. 8

FIG. 9

**FIG. 10**

**FIG. 11**

**FIG. 12**

FIG. 13

FIG. 14

FIG. 15

**FIG. 16**

**FIG. 17**

**FIG. 18**

52

40

42

44

100

102

**FIG. 19**

14

106

52

40

44

100

102

**FIG. 20**

**FIG. 21**

**FIG. 22**